(19) **Europäisches Patentamt / European Patent Office / Office européen des brevets**

(11) **EP 3 657 000 B2**

(12) **NEW EUROPEAN PATENT SPECIFICATION**
After opposition procedure

(45) Date of publication and mention
of the opposition decision:
**18.02.2026  Bulletin 2026/08**

(45) Mention of the grant of the patent:
**30.08.2023  Bulletin 2023/35**

(21) Application number: **19840704.1**

(22) Date of filing: **05.07.2019**

(51) International Patent Classification (IPC):
**F02F 1/00** (2006.01)        **F02F 5/00** (2006.01)
**F16J 10/00** (2006.01)       **F02F 1/20** (2006.01)

(52) Cooperative Patent Classification (CPC):
**F02F 1/20; F16J 10/00**

(86) International application number:
**PCT/JP2019/026763**

(87) International publication number:
**WO 2020/022032 (30.01.2020 Gazette 2020/05)**

(54) **CAST IRON CYLINDER LINER, AND INTERNAL COMBUSTION ENGINE**

ZYLINDERAUSKLEIDUNG AUS GUSSEISEN UND VERBRENNUNGSMOTOR

CHEMISE DE CYLINDRE EN FONTE, ET MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2018  JP 2018139942**

(43) Date of publication of application:
**27.05.2020  Bulletin 2020/22**

(73) Proprietors:
• **TPR CO., LTD.**
**Tokyo 100-0005 (JP)**
• **TPR INDUSTRY CO., LTD.**
**Sagae-shi, Yamagata 990-0561 (JP)**

(72) Inventors:
• **KAWAI Kiyoyuki**
**Tokyo 100-0005 (JP)**
• **AMAIKE Shinji**
**Tokyo 100-0005 (JP)**
• **NANGO Tetsuya**
**Tokyo 100-0005 (JP)**
• **TAMAKI Seiji**
**Tokyo 100-0005 (JP)**
• **HOSHINO Seeroku**
**Tokyo 100-0005 (JP)**
• **SUZUKI Wataru**
**Sagae-shi, Yamagata 990-0561 (JP)**
• **OIZUMI Takashi**
**Sagae-shi, Yamagata 990-0561 (JP)**
• **YAGUCHI Hiroshi**
**Toyota-shi, Aichi 471-8571 (JP)**
• **SUZUKI Takashi**
**Toyota-shi, Aichi 471-8571 (JP)**

(74) Representative: **Gill Jennings & Every LLP**
**The Broadgate Tower
20 Primrose Street
London EC2A 2ES (GB)**

(56) References cited:
CN-A- 103 341 730       CN-U- 204 610 056
DE-A1- 102007 017 977   DE-A1- 102007 017 977
JP-A- 2002 295 304      JP-A- 2002 295 304
JP-A- 2003 286 895      JP-A- 2017 110 804
JP-A- 2018 053 898      JP-A- 2018 053 898
US-A1- 2007 261 658

EP 3 657 000 B2

**Description**

Technical Field

The present invention relates to a cast iron cylinder liner and an internal combustion engine.

Background Art

As an obj ect with regard to an internal combustion engine in recent years, there has been given reduction in fuel consumption. Reduction in friction loss of a piston system is effective as a measure for the reduction in fuel consumption of the internal combustion engine . In order to reduce the friction loss of the piston system, the following studies are being conducted. a) With regard to a piston portion, for example, studies related to reduction in tensile force of a piston ring, an outer peripheral shape of a sliding surface, and reduction in friction coefficient of surface treatment are being conducted. b) With regard to a cylinder or a cylinder liner, for example, studies related to surface roughness, materials, and reduction in friction coefficient of surface treatment for an inner peripheral sliding surface are being conducted (for example, Patent Literatures 1 to 5).

In Patent Literature 1, there is proposed a combined slide member that includes a piston ring including a sliding surface having a surface roughness Rz (ten-point average roughness, JIS B 0601:1994) of from 0.5 um to 1.0 um and a cylinder liner including a sliding surface having a surface roughness Rz (ten-point average roughness, JIS B 0601:1994) of from 0.5 um to 1.5 um, an initial wear height Rpk of from 0.05 $\mu$m to 0.2 $\mu$m based on the DIN4776 standard, an effective load roughness Rk of from 0.2 $\mu$m to 0.6 um, and an oil reservoir depth Rvk of from 0.10 um to 0.35 um. Moreover, in Patent Literature 1, it is disclosed that the sliding surface of the cylinder liner is made of any one of cast iron, boron cast iron, and steel. With the technology described in Patent Literature 1, a slide member which is capable of satisfying the demand for the reduction in friction and is excellent in scuffing resistance (seizing resistance) can be provided.

Moreover, in Patent Literature 2, there is proposed an iron-based spray coating film for a cylinder block formed on a cylinder bore inner peripheral surface of a cylinder block base material. A surface corresponding to the cylinder bore inner peripheral surface of the iron-based spray coating film for a cylinder block having pores has an average roughness Ra equal to or lower than 0.4 $\mu$m, and an oil reservoir depth Rvk of from 0.2 $\mu$m to 2.0 $\mu$m. In a cylinder block as applied to a high-output engine in which a significantly high cylinder inner pressure is applied, a high load is repeatedly applied to the spray coating film by a high combustion pressure, with the result that a crack and peeling thus occur inside the spray coating film. In order to solve this problem, the technology disclosed in Patent Literature 2 provides an iron-based spray coating film for a cylinder block which is excellent in peeling resistance under a high surface pressure.

Moreover, in Patent Literature 3, there is proposed a combination of an aluminum alloy cylinder liner and a piston ring, which includes an outer peripheral sliding surface having a nitrided layer formed thereon and has a predetermined surface roughness, which slide on each other at a surface pressure of from 0.03 MPa to 0.2 MPa. In this configuration, the surface roughness of the inner peripheral surface of the aluminum alloy cylinder liner is set so as to have a ten-point average roughness Rz based on JIS B 0601:1994 of from 0.5 um to 1.0 um, an effective load roughness Rk of from 0.2 $\mu$m to 0.4 $\mu$m, an initial wear height Rpk of from 0.05 $\mu$m to 0.1 $\mu$m, and an oil reservoir depth Rvk of from 0.08 $\mu$m to 0.2 $\mu$m. The technology disclosed in Patent Literature 3 has an object to deal with a demand for reduction in weight of an engine and achieve reduction in friction between the cylinder liner and the piston ring, reduction in mutual wear amount, and improvement in scuffing resistance.

Moreover, in Patent Literature 4, there is proposed an aluminum alloy cylinder block formed so that a surface of a cylinder bore satisfies Rk+Ppk<1.0 um and Rk+Rvk<2.0 um. In these relationships, Rk is the effective load roughness, Rpk is the initial wear height, and Rvk is the oil reservoir depth. The technology described in Patent Literature 4 has an object to provide an aluminum alloy cylinder block that can be manufactured at low cost while ensuring required characteristics of a cylinder bore surface. Moreover, in Patent Literature 4, it is disclosed that scuffing resistance equal to or higher than that of the cast iron cylinder liner can be ensured on a cylinder bore surface by setting a width of a pit blank region, which has Rk higher than 0.65 $\mu$m and has a height difference smaller than 2 $\mu$m between recesses and protrusions formed in a spiral shape on a surface of the cylinder bore, to be equal to or smaller than 1.0 $\mu$m.

Moreover, in Patent Literature 5, there is proposed a sliding contact member having a sliding contact surface, which is formed by honing and having a ten-point average roughness (Rz) equal to or higher than 1 um and equal to or lower than 5 $\mu$m, a profile bearing length ratio (tp) equal to or higher than 55% and equal to or lower than 98%, and an effective load roughness (Rk) equal to or lower than 1 $\mu$m. The technology described in Patent Literature 5 has an object to provide a sliding contact member having a sliding contact surface, which is excellent in lubricating oil holding function and sufficiently low in friction resistance upon sliding contact of a predetermined member.

Another cylinder liner is known from CN204610056U.

Citation List

Patent Literature

[PTL 1] JP 2004-116707 A
[PTL 2] JP 4984214 B2
[PTL 3] JP 4954644 B2
[PTL 4] JP 2012-12957 A
[PTL 5] JP 4678802 B2

Summary of Invention

Technical Problem

As described above, in recent years, from a perspective of the reduction in weight and cost of the internal combustion engine, a cylinder liner or a cylinder block made of aluminum alloy as exemplified in Patent Literature 3 and Patent Literature 4 are being studied. However, when a material forming the inner peripheral sliding surface of the cylinder bore is the aluminum alloy, the aluminum alloy is inferior in stiffness and heat resistance compared with an iron-based material, and is more liable to cause problems in wear resistance and scuffing resistance (for example, see Paragraphs 0002 to 0003 of Patent Literature 2). Moreover, as exemplified in Patent Literature 2, when the material forming the inner peripheral sliding surface of the cylinder bore is a spray coating film, an interface is present between the spray coating film and the cylinder block, and pores are also present in the spray coating film, with the result that occurrence of peeling at the interface and formation of a crack starting from the pore are fundamentally unavoidable. Based on these points, from a perspective of the material of the inner peripheral sliding surface, more excellent tribology characteristics can be ensured through use of the cast iron cylinder liner, and hence it is considered that the cast iron cylinder liner is more advantageous.
Meanwhile, in order to deal with the demand for the reduction in fuel consumption of the internal combustion engine, lubricating oil having lower viscosity has come to be used for reduction in friction in recent years. However, when the viscosity of the lubricating oil is reduced, such a chance that an outer peripheral sliding surface of the piston ring and the inner peripheral sliding surface of the cylinder bore directly come in contact with each other increases, with the result that the seizing is more liable to occur. Therefore, even with the related-art cast iron cylinder liner, it comes to be difficult to simultaneously ensure reduction in friction and excellent seizing resistance.
The present invention has been made in view of the above-mentioned circumstances, and has an object to provide a cast iron cylinder liner that reduces the friction and has excellent seizing resistance, and an internal combustion engine.

Solution to Problem

The above-mentioned object is achieved by the invention as set out in the appended claims.
According to the present invention, there is provided a cast iron cylinder liner as defined in claim 1.
According to the present invention, there is provided an internal combustion engine as defined in claim 8.

Advantageous Effects of Invention

According to the present invention, a cast iron cylinder liner that reduces the friction, and has excellent seizing resistance, and an internal combustion engine can be provided.

Brief Description of Drawings

FIGS. 1 are schematic illustrations of an overview of the core roughness depth Rk, the reduced peak height Rpk, and the reduced valley depth Rvk. FIG. 1(A) is a schematic sectional view for illustrating an example of an object surface (roughness curve) subject to measurement of Rk, Rpk, and Rvk. FIG. 1(B) is a chart for showing a load curve acquired by measuring the object surface (roughness curve) illustrated in FIG. 1(A).
FIG. 2 is a schematic view for illustrating an example of a cylinder liner according to this embodiment.
FIG. 3 is a metallurgical microscope photograph (magnification: 400x) showing an example of a sectional structure adjacent to an inner peripheral sliding surface of the cylinder liner according to this embodiment.
FIG. 4 is a schematic view for illustrating another example of the cylinder liner according to this embodiment.

FIGS. 5 are metallurgical microscope photographs showing machining marks constituted by cross-hatch patterns formed on the inner peripheral sliding surface of the cylinder liner illustrated in FIG. 4. FIG. 5(A) is an example of a metallurgical microscope photograph in a region Tu illustrated in FIG. 4. FIG. 5(B) is an example of a metallurgical microscope photograph in a region Td illustrated in FIG. 4.

FIGS. 6 are charts for showing profiles of roughness curves when surface roughness of the inner peripheral sliding surface of the cylinder liner illustrated in FIG. 4 was measured. FIG. 6(A) is a chart for showing an example of a profile of a roughness curve in the region Tu illustrated in FIG. 4. FIG. 6(B) is a chart for showing an example of the profile of the roughness curve in the region Td illustrated in FIG. 4.

FIG. 7 is a schematic view for illustrating an example of an internal combustion engine according to this embodiment.

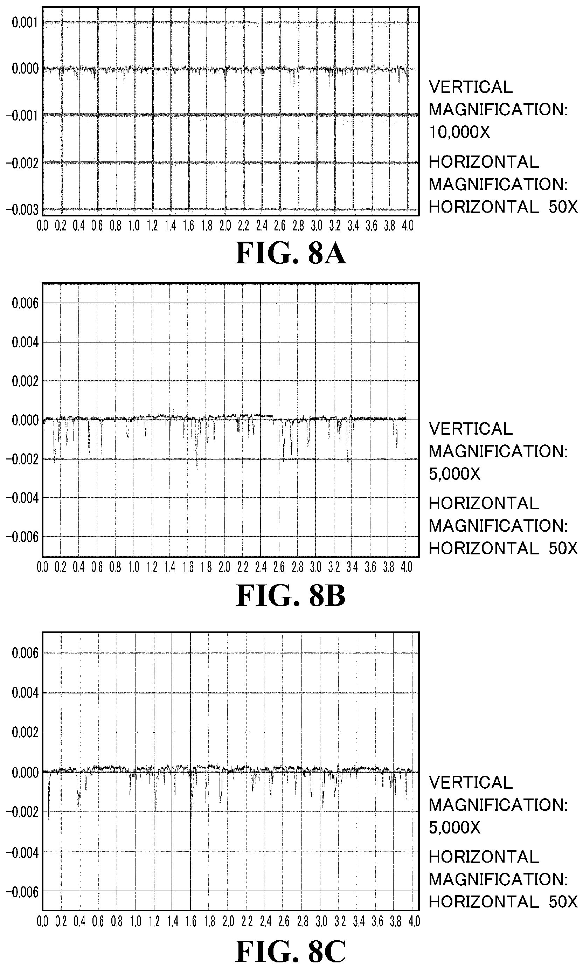

FIGS. 8 are charts for showing profiles of roughness curves when surface roughness of the inner peripheral sliding surface of the cylinder liner according to this embodiment was measured. FIG. 8 (A) is a chart for showing an example of the profile of the roughness curve of the inner peripheral sliding surface of the cylinder liner in an example A1 (CHA30). FIG. 8 (B) is a chart for showing an example of the profile of the roughness curve of the inner peripheral sliding surface of the cylinder liner in an example A14 (CHA30) . FIG. 8 (C) is a chart for showing an example of the profile of the roughness curve of the inner peripheral sliding surface of the cylinder liner in an example A18 (CHA30).

FIG. 9 is a schematic view for illustrating a reciprocating friction tester used for measurement of a friction coefficient and evaluation of seizing resistance.

Description of Embodiments

According to this embodiment, there is provided a cast iron cylinder liner (hereinafter simply referred to as "cylinder liner" in some parts), including an inner peripheral sliding surface made of the cast iron, in which the inner peripheral sliding surface includes a region satisfying Expression (1) to Expression (3),

$$\text{Expression (1)} \quad Rvk/Rk \geq 1.0$$

$$\text{Expression (2)} \quad 0.08 \ \mu m \leq Rk \leq 0.2 \ \mu m$$

$$\text{Expression (3)} \quad Rk - Rpk > 0.02 \mu m$$

In Expression (1) to Expression (3), Rk is a core roughness depth based on JIS B0671-2:2002, Rpk is a reduced peak height based on JIS B0671-2:2002, and Rvk is a reduced valley depth based on JIS B0671-2:2002.

The cast iron cylinder liner according to this embodiment includes the inner peripheral sliding surface formed of the cast iron. Moreover, the cast iron contains precipitated graphite having a self-lubrication property, and is thus preferred as a slide member. Moreover, when the material forming the inner peripheral sliding surface is the cast iron, more excellent tribology characteristics are easily secured compared with a case in which a material forming the inner peripheral sliding surface is aluminum alloy or a case in which the inner peripheral sliding surface is formed of the spray coating film.

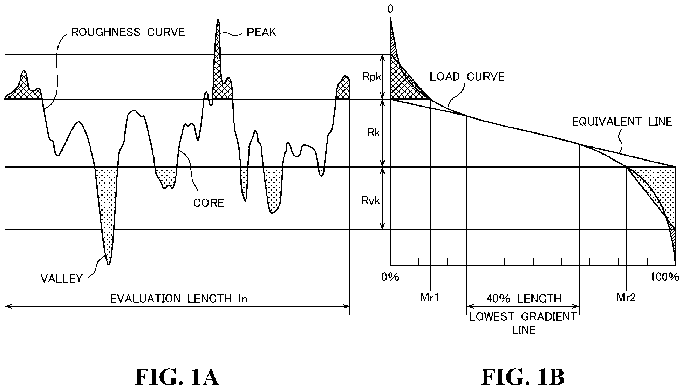

The core roughness depth Rk, the reduced peak height Rpk, and the reduced valley depth Rvk given in Expression (1) to Expression (3) are roughness parameters based on JIS B0671-2:2002. FIGS. 1 are schematic illustrations of an overview of the core roughness depth Rk, the reduced peak height Rpk, and the reduced valley depth Rvk. FIG. 1A is a schematic sectional view for illustrating an example of an object surface (roughness curve) subject to measurement of Rk, Rpk, and Rvk. FIG. 1(B) is a chart for showing a load curve acquired by measuring the object surface (roughness curve) illustrated in FIG. 1(A). Vertical axes of FIG. 1(A) and FIG. 1(B) represent a height direction of an object surface (roughness curve). A horizontal axis of FIG. 1(A) represents a direction orthogonal to the height direction. A horizontal axis of FIG. 1(B) represents a profile bearing length ratio (%).

When a roughness of the object surface is measured within an extent of an evaluation length ln (l is the lower case of L) as illustrated in FIG. 1(A), a load curve in an S shape having one inflection point can be obtained as illustrated in FIG. 1(B). Rk, Rpk, and Rvk can be obtained from an equivalent line (a line having the lowest gradient) obtained at a center portion of the load curve containing 40% of measurement points of the roughness curve, a position at which the profile bearing length ratio is 0%, and a position at which the profile bearing length ratio is 100%. The core roughness depth Rk is a difference between an upper level and a lower level of a core of the roughness curve. The reduced peak height Rpk is an average height of a peak over the core of the roughness curve. The reduced valley depth Rvk is an average depth of a valley under the core of the roughness curve. In FIG. 1(B), Mr1 is a profile bearing length ratio in percent at a point at which a line forming a boundary between the peak and the core in the roughness curve crosses the load curve. Moreover, Mr2 is a profile bearing length in percent at a point at which a line forming a boundary between the valley and the core in the roughness curve crosses the load curve.

As is apparent from FIGS. 1, Rk is a roughness parameter corresponding to the center portion (core) in the height direction of the roughness curve. Rpk is a roughness parameter corresponding to the peak protruding toward an upper side of the core of the roughness curve. Rvk is a roughness parameter corresponding to the valley deeply recessed toward a lower side of the core of the roughness curve. A description is later given of detailed measurement conditions for Rk, Rpk, and Rvk.

Setting Rvk/Rk so as to be equal to or higher than 1.0 corresponds to forming the reduced valley depth Rvk so as to be equal to or larger than the core roughness depth Rk as given by Expression (1), and thus means that a valley (recess) relatively deep with respect to the core is formed. That is, when the core roughness depth Rk is constant, a volume of the valley (recessed portion) in which lubricating oil can easily be retained can be increased by setting the Rvk/Rk so as to be equal to or higher than 1.0. Therefore, when the friction state is the boundary lubrication state or the mixed lubrication state, lubricating oil retained in the valley (recessed portion) exerts an action of supplying the lubricating oil to a surface vicinity of the core, and the seizing resistance is thus increased. Moreover, such action and effect are more prominently exerted for a surface property that is likely to bring the friction state into the boundary lubrication state or the mixed lubrication state (for example, the core roughness depth Rk is lower than 0.2 $\mu$m).

In order to increase the volume of the valley (recess) in which the lubricating oil is easily retained, it is preferred that RvK/Rk be equal to or higher than 1.5, more preferably equal to or higher than 2.0, and further more preferably equal to or higher than 3.0. Moreover, in order to increase the seizing resistance, it is preferred that Rk be equal to or higher than 0.2 um, and RvK/Rk be equal to or higher than 3.0, and it is more preferred that Rk be equal to or higher than 0.2 um, and RvK/Rk be equal to or higher than 4.0.

Meanwhile, an upper limit value of RvK/Rk is not particularly limited, but when the value of RvK/Rk is excessively large, machining precision when the inner peripheral sliding surface is formed is unstable. Therefore, it is preferred that RvK/Rk be equal to or lower than 10.0, more preferably equal to or lower than 8.0.

Moreover, as given by Expression (2), the friction can be reduced by setting the core roughness depth Rk to be equal to or lower than 0.3 um to reduce the friction coefficient. Further, the seizing resistance can be increased by setting the core roughness depth Rk to be equal to or higher than 0.08 $\mu$m. From a perspective of reducing the friction coefficient to further reduce the friction, it is preferred that the core roughness depth Rk be equal to or lower than 0.25 $\mu$m, according to the invention equal to or lower than 0.20 um, further more preferably equal to or lower than 0.18 $\mu$m, particularly more preferably equal to or lower than 0.16 $\mu$m. Moreover, from a perspective of increasing the seizing resistance, it is preferred that the core roughness depth Rk be equal to higher than 0.10 $\mu$m, more preferably equal to higher than 0.12 $\mu$m.

Further, as given by Expression (3), the friction coefficient is reduced, thereby being capable of reducing the friction, by setting the core roughness depth Rk to be higher than the reduced peak height Rpk. A description is now given of a reason for this. First, when the core roughness depth Rk is equivalent to the reduced peak height Rpk or is lower than the reduced peak height Rpk, a tip of the peak of the inner peripheral sliding surface of the cylinder liner is likely to come in contact mainly with an outer peripheral sliding surface of a piston ring at a high contact surface pressure. Therefore, even when the friction state is the hydrodynamic lubrication state, a contact without intermediation of the lubricating oil occurs to the tip of the peak, and a chance of appearance of micro-scuffing increases. Therefore, the friction coefficient consequently increases in such a state, and the friction increases. It is preferred that the value of Rk-Rpk be equal to or higher than 0.02 $\mu$m, more preferably equal to or higher than 0.05 $\mu$m.

Moreover, an upper limit value of the value of Rk-Rpk is not particularly limited, but it is preferred that the value of Rk-Rpk be equal to or lower than 0.27 um, more preferably equal to or lower than 0.23 um in practice.

As described above, in the cast iron cylinder liner according to this embodiment, the friction coefficient can be small, thereby being capable of reducing the friction, and excellent seizing resistance can be secured by using the cast iron for the material forming the inner peripheral sliding surface, and causing the inner peripheral sliding surface to contain an area satisfying Expression (1) to Expression (3).

Referring to FIG. 1(A), the peak and the core can be considered as portions mainly causing an occurrence of the friction force due to the contact with the mating member. That is, the sum (Rk+Rpk) of the core roughness depth Rk and the reduced peak height Rpk closely correlates with the friction coefficient in the contact with the mating member, and is a roughness parameter closely relating to the magnitude of the friction force. Thus, from a perspective of reducing the friction coefficient, to thereby reduce the friction, it is preferred that Rk+Rpk of the region satisfying Expression (1) to Expression (3) be lower than 0.6 um, more preferably equal to or lower than 0.45 um, further more preferably equal to or lower than 0.38 um, particularly more preferably equal to or lower than 0.31 um, most preferably equal to or lower than 0.26 um. A lower limit value of Rk+Rpk is not particularly limited, but it is preferred that the lower limit value of Rk+Rpk be equal to or higher than 0.11 um, more preferably equal to or higher than 0.15 um in practice.

The reduced valley depth Rvk in the region satisfying Expression (1) to Expression (3) is not limited as long as the reduced valley depth Rvk satisfies Expression (1), and can be selected within a range of, for example, from about 0.04 $\mu$m to about 2.5 $\mu$m. As the value of the reduced valley depth Rvk increases, lubricating oil is more likely to be retained in grooves formed on the inner peripheral sliding surface, which is advantageous for an increase in seizing resistance, but a consumed amount of the lubricating oil is liable to increase. Therefore, from a perspective of securing sufficient seizing resistance while the consumed amount of the lubricating oil is suppressed as much as possible, it is preferred that the value of the reduced valley depth Rvk be equal to or lower than 1.4 um, more preferably equal to or lower than 1.1 um, further more preferably equal to or lower than 1.0 um, particularly more preferably equal to or lower than 0.8 um. Moreover, from a perspective of further increasing the seizing resistance, it is preferred that the value of the reduced valley depth Rvk be equal to higher than 0.32 um, more preferably equal to higher than 0.40 um, further more preferably equal to higher than 0.45 $\mu$m.

Moreover, from the perspective of simultaneously achieving the reduction in friction, the seizing resistance, and the suppression of the consumed amount of the lubricating oil in balance, as a preferred combination of a range in numerical value of the core roughness depth Rk and a range in numerical value of the reduced valley depth Rvk, for example, (Rk, Rvk)=(0.08 $\mu$m to 0.25 $\mu$m, equal to or lower than 1.0 $\mu$m), (0.10 $\mu$m to 0.18 $\mu$m, 0.32 um to 1.1 $\mu$m), and the like are given.

Moreover, from a perspective of reducing the friction coefficient, it is preferred that the arithmetical average roughness Ra of the region satisfying Expression (1) to Expression (3) be equal to or lower than 0.5 um, more preferably equal to or lower than 0.41 um, further more preferably equal to or lower than 0.32 um, particularly more preferably equal to or lower than 0.28 um. Moreover, a lower limit value of the arithmetic average roughness Ra is not particularly limited, and it is preferred that the lower limit value of the arithmetic average roughness Ra be equal to or higher than 0.03 um in practice. In this specification, the arithmetic average roughness Ra is a roughness parameter based on JIS B0601:2013. The arithmetic average roughness Ra is a value obtained from the roughness curve while the reference length l (l is the lower case of L) is 0.8 mm. Details of measurement conditions of Ra are described later.

As long as the inner peripheral sliding surface contains the region satisfying Expression (1) to Expression (3), surface properties such as values of roughness parameters other than Rk, Rpk, Rvk, and Ra described above and a pattern of machining marks formed by surface machining are not particularly limited. However, it is particularly preferred that a machining mark constituted by a cross-hatch pattern including a first parallel straight line group and a second parallel straight line group crossing the first parallel line group be formed in the region satisfying Expression (1) to Expression (3).

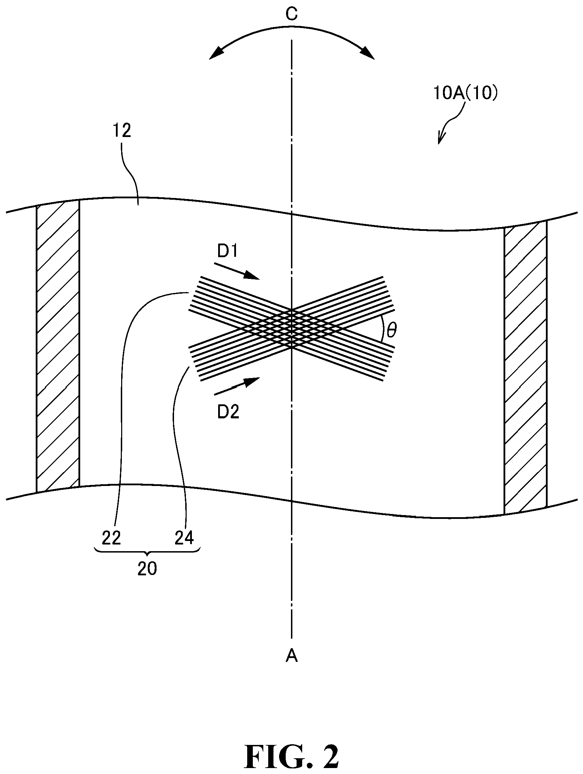

FIG. 2 is a schematic view for illustrating an example of the cylinder liner according to this embodiment, and is specifically a view for illustrating an inner peripheral sliding surface of a semi-cylindrical member obtained by bisecting a cylinder liner in a cylindrical shape. In FIG. 2, the reference symbol A indicates a center axis of the cylinder liner, and the reference symbol C indicates a circumferential direction of the cylinder liner. In the example illustrated in FIG. 2, the machining mark constituted by a cross-hatch pattern is formed on an entire surface of the inner peripheral sliding surface, but only a part of the machining mark constituted by the cross-hatch pattern is illustrated for the sake of an easy description of the cross-hatch pattern and a cross-hatch angle.

The machining mark 20 constituted by the cross-hatch pattern including a first parallel line group 22 and a second parallel line group 24 crossing the first parallel line group 22 is formed on an inner peripheral sliding surface 12 of the cylinder liner 10A (10) illustrated in FIG. 2. An angle $\theta$ (an angle of an expansion of a gap between the two parallel line groups 22 and 24 from one side toward another side of the circumferential direction C) between a direction D1 in which the first parallel line group 22 extends toward the one side to the another side of the cylinder liner circumferential direction C and a direction D2 in which the second parallel line group 24 extends toward the one side to the another side of the cylinder liner circumferential direction C in this configuration is referred to as cross-hatch angle (hereinafter simply referred to as "CHA" in some parts).

When the machining mark 20 constituted by the cross-hatch pattern is formed in the region of the inner peripheral sliding surface 12 satisfying Expression (1) to Expression (3), the cross-hatch angle $\theta$ is not particularly limited. However, it is preferred that a lower limit value be equal to or larger than 3 degrees, and that an upper limit value be equal to or smaller than 60 degrees, more preferably equal to or smaller than 55 degrees, further more preferably equal to or smaller than 50 degrees, particularly more preferably equal to or smaller than 40 degrees, and most preferably equal to or smaller than 38 degrees. It is preferred that a combination of the upper limit value and the lower limit value be equal to or larger than 3 degrees and equal to or smaller than 60 degrees, more preferably equal to or larger than 3 degrees and equal to or smaller than 50 degrees. The friction coefficient is more easily reduced, to thereby reduce the friction, by setting the cross-hatch angle to be equal to or smaller than 60 degrees (more preferably equal to or smaller than 50 degrees). From a perspective of improvement in seizing resistance, there is almost no difference between a case in which the cross-hatch angle is 50 degrees and a case in which the cross-hatch angle is 60 degrees. Therefore, from a perspective of further reducing the friction while certain seizing resistance is secured, it is particularly preferred that the cross-hatch angle be equal to or smaller than 50 degrees. The seizing resistance is easily increased by setting the cross-hatch angle to be equal to or larger than 3 degrees. In addition, when the cross-hatch angle $\theta$ is smaller than 3 degrees, a period required for honing is significantly long, workability significantly decreases, and the honing is extremely difficult in practice. Therefore, also from a perspective of the workability, it is particularly preferred that the cross-hatch angle $\theta$ be equal to or larger than 3 degrees.

Moreover, a cylinder liner more excellent in practicality can be obtained by setting the cross-hatch angle to be equal to or larger than 3 degrees and equal to or smaller than 50 degrees, to thereby simultaneously achieve the reduction in friction and the increase in seizing resistance in balance . In order to reduce the friction coefficient, to thereby simultaneously achieve the reduction in friction and the increase in seizing resistance in more balance, it is preferred that the cross-hatch angle θ be preferably equal to or larger than 20 degrees and equal to or smaller than 40 degrees, more preferably equal to or larger than 25 degrees and equal to or smaller than 35 degrees. Moreover, when the improvement of the reduction in friction out of the reduction in friction and the increase in seizing resistance is more emphasized, it is preferred that the cross-hatch angle θ be equal to or larger than 3 degrees and equal to or smaller than 40 degrees, more preferably equal to or larger than 3 degrees and equal to or smaller than 38 degrees, further more preferably equal to or larger than 3 degrees and equal to or smaller than 35 degrees, particularly more preferably equal to or larger than 3 degrees and equal to or smaller than 30 degrees.

Moreover, the cross-hatch angle θ may be the same at any location on the inner peripheral sliding surface 12, but may be different between one region and another region of the inner peripheral sliding surface 12. The cross-hatch angle θ can be measured by a general endoscope or a metallurgical microscope. As a measurement position of the cross-hatch angle θ, a center position in an axial direction A of the cylinder liner 10 is selected in a region in which the cross-hatch angle θ is the same.

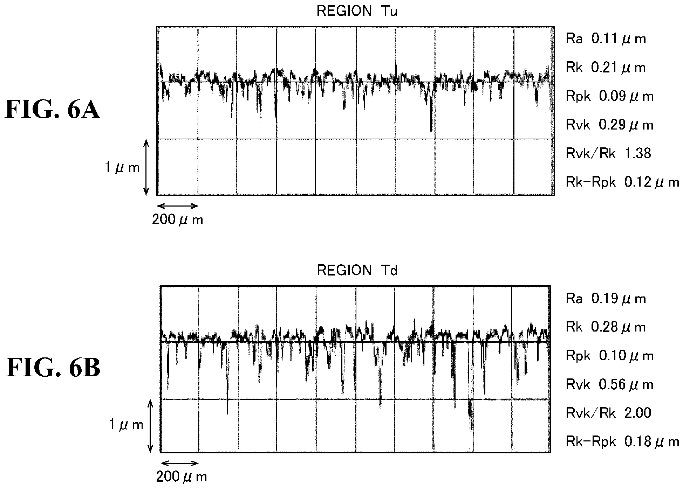

It was found that, when the material forming the inner peripheral sliding surface is the cast iron, the surface properties satisfying Expression (1) to Expression (3), namely such surface properties that there is provided a smooth surface in which a height forming plateau portions of the inner peripheral sliding surface is approximately constant while a capability of retaining the lubricating oil in valleys (recessed portions) formed between the plateau portions is increased as exemplified in FIGS. 6 and FIGS. 8 described later cannot be achieved by means of related-art honing disclosed in Patent Literature 1 and the like as a result of study by the inventors of the present invention. Related-art honing conditions with a subject to honing being materials (aluminum alloy, spray coating film, and the like) other than the cast iron disclosed in Patent Literature 3 and the like cannot be used as reference at all when the cast iron having completely difference material characteristics is honed. Therefore, the inventors of the present invention studied and found novel honing conditions that provide the surface properties satisfying Expression (1) to Expression (3) when the material forming the inner peripheral surface is the cast iron. A detailed description is now given of a preferred machining method for the inner peripheral sliding surface when the cylinder liner according to this embodiment is manufactured.

First, a cylindrical member (a cylinder liner in an unfinished state) made of the cast iron is prepared by casting. Then, a dimension of the inner diameter is adjusted by boring an inner peripheral surface of the cylindrical member so as to be close to a dimension of the inner diameter (final dimension) of a finished member. It is preferred that this boring be performed in two steps, which are a rough boring step of performing boring so that the inner diameter dimension is roughly close to the final dimension and a fine boring step of performing more precise boring so that the inner diameter after the roughboring step is closer to the final dimension.

Then, honing is carried out for the cylindrical member after the boring step so that the inner diameter dimension is further close to the final dimension, and the inner peripheral sliding surface 12 having the surface properties satisfying Expression (1) to Expression (3) is formed. In this honing, a rough honing step, a first fine honing step, and a second fine honing step are performed in this order. In this procedure, the rough honing step is a step having such a main purpose that the inner diameter dimension is closer to the final dimension. The first fine honing step and the second fine honing step are steps having such a main purpose that the inner peripheral sliding surface satisfying Expression (1) to Expression (3) is formed. Chemical conversion treatment step of applying chemical conversion treatment such as phosphating process to the inner peripheral surface of the cylindrical member may be performed between the first fine honing step and the second fine honing step as needed. When the phosphating process is applied to the inner peripheral surface of the cylindrical member, fine holes are formed by etching action on the inner peripheral sliding surface of the finished cylinder liner, and a property of retaining lubricating oil can be increased by the fine holes.

Diamond honing stones for which metal bond are used as a binding material is used in the rough honing step. The honing is performed while a water-soluble grinding liquid is used until the inner diameter reaches the final dimension in a state in which the honing stones are pressed against the inner peripheral surface of the cylindrical member by means of hydraulic expansion.

Moreover, diamond honing stones are used so as to perform honing while a water-soluble grinding liquid is used in a state in which the honing stones are pressed against the inner peripheral surface of the cylindrical member by means of hydraulic expansion in the first fine honing step. Diamond honing grains used in the first fine honing have an average grain diameter approximately 1/3 times as large as an average grain diameter of diamond honing grains used in the rough honing, and are bound and fixed through use of metal bond lower in a degree of binding than the binding material for the diamond honing grains used in the rough honing step. The first fine honing step is performed mainly in order to obtain a desired Rvk value after the second fine honing step is finished.

Moreover, diamond honing stones are used so as to perform honing while a water-soluble grinding liquid is used in a state in which the honing stones are pressed against the inner peripheral surface of the cylindrical member by means of hydraulic expansion in the second fine honing step. Diamond honing grains used in the second fine honing have an average grain diameter approximately 1/3 times as large as an average grain diameter of diamond honing grains used in the first fine honing, and are bound and fixed through use of metal bond lower in a degree of binding than the binding material for the diamond honing grains used in the first fine honing step.

When the material forming the inner peripheral sliding surface is the cast iron, the surface properties satisfying Expression (1) to Expression (3) can be achieved by performing the above-mentioned honing process. Other honing conditions such as a honing surface pressure (a surface pressure determined by a combination of an expansion pressure of honing stones and a machining surface area of the honing stones), the number of rotations of a honing head, and the like can appropriately be adjusted in order to obtain the desired surface properties within a range satisfying Expression (1) to Expression (3) . For example, when a final dimension is approximately 80 mm, it is preferred that the number of honing stones mounted to a honing head be 4 to 6, the length of the honing stones be 40 mm to 100 mm, the width of the honing stones be 1 mm to 4 mm, and the number of rotations of the honing head be 160 rpm to 240 rpm. Moreover, the cross-hatch angle θ of the inner peripheral surface may be set in the first honing step, and the cross-hatch angles in the other honing steps may be freely selected.

When two or more regions different in surface property need to be formed with respect to the axial direction A of the inner peripheral sliding surface 12, an upward/downward motion of the honing head in the axial direction A, the number of rotation of the honing head or the expansion pressure of the honing stones only need to appropriately be changed. As a result, for example, there can be provided a cylinder liner 10 in which a region on one side and a region on another side in the axial direction A of the inner peripheral sliding surface 12 are different in values of roughness parameters such as Rk, Rpk, and Rvk, and/or patterns of the machining mark such as the cross-hatch angle θ.

The value of the reduced valley depth Rvk of the inner peripheral sliding surface 12 is not particularly limited in the cylinder liner 10 according to this embodiment. However, when the reduced valley depth Rvk of the inner peripheral sliding surface 12 exceeds 1.8 μm, ahoningpropertydegrades, a variation in roughness of the inner peripheral sliding surface 12 tend to increase, or any of Expression (1) to Expression (3) tend to be difficult to be satisfied. Therefore, it is preferred that the reduced valley depth Rvk of the inner peripheral sliding surface 12 be equal to or lower than 1.8 μm.

Moreover, as the grinding liquid used for the honing, when oil-based grinding liquid is used, a cutting quality of the honing stones is good, and a clean machining mark without burrs is likely to be obtained on the inner peripheral surface after the honing compared with water-soluble grinding liquid. In other words, Expression (2) and Expression (3) are more easily satisfied by using the oil-based grinding liquid than by using the water-soluble grinding liquid. However, the water-soluble grinding liquid is advantageous over the oil-based grinding liquid in terms of waste liquid disposal. However, as a result of study by the inventors of the present invention, it was found that occurrence of the burrs also easily be suppressed, thereby being capable of satisfying also Expression (2) and Expression (3) in the honing method using the water-soluble grinding liquid even when the water-soluble grinding liquid is used.

It is preferred that the cylinder liner according to this embodiment be manufactured through use of the above-mentioned honing conditions . However, the manufacturing method for a cylinder liner according to this embodiment is not limited to the manufacturing method using the above-mentioned honing conditions, and a cylinder liner may be manufactured through use of methods/conditions for machining the inner circumference other than the above-mentioned honing conditions.

A casting method for the cylinder liner 10 according to this embodiment is not particularly limited, and publicly-known casting method such as the sand casting and the centrifugal casting can be used. Moreover, the material forming the cylinder liner according to this embodiment is the cast iron, any publicly-known materials such as the flake graphite cast iron and the vermicular graphite cast iron can be used as long as the material is the cast iron, but it is particularly preferred to use the flake graphite cast iron. As suitable flake graphite cast iron, for example, FC250 or FC300 which are cast iron materials based on JIS G5501 or materials equivalent to these cast iron materials (an FC250 equivalent material and an FC300 equivalent material described below) are given. Moreover, the hardness of the cast iron is not particularly limited, but it is preferred that the hardness based on JIS Z 2245:2011 be equal to or higher than 90 HRB. The reduction in friction coefficient (reduction in friction) and the increase in seizing resistance are made easier by setting the hardness to be equal to or higher than 90 HRB. Meanwhile, an upper limit of the hardness is not particularly limited, but, from a perspective of practicality such as workability, it is preferred that the hardness be equal to or lower than 115 HRB. Moreover, when the reduction in friction coefficient (reduction in friction) and the increase in seizing resistance are more emphasized, it is preferred that the hardness be equal to or higher than 100 HRB and equal to or lower than 115 HRB. When workability is more emphasized, it is preferred that the hardness be equal to or higher than 90 HRB and equal to or lower than 105 HRB. Measurement of the hardness is performed at a position separated from the inner peripheral sliding surface by 1 mm or more in a freely selected cross-section in the axial direction at a center position in the axial direction of the cylinder liner. The same measurement method is performed for a material hardness of a cylinder liner having the inner peripheral sliding surface subjected to chemical conversion treatment such as the phosphating process.

(1) FC250 Equivalent Material

<Composition> Composition containing C: equal to or more than 3.0% and equal to or less than 3.7%, Si: equal to or more than 2.0% and equal to or less than 2.8%, Mn: equal to or more than 0.5% and equal to or less than 1.0%, P: equal to or less than 0.2%, S: equal to or less than 0.15%, and Cr: equal to or less than 0.2% in mass%, the remaining Fe, and inevitable impurities. Moreover, this composition may include at least one element of B, Cu, Nb, W, and the like.

<Size of Graphite and the Like> The size of graphite is not particularly limited, andmaybe, for example, 4 to 6 (ISO 945-1:2008). Moreover, a cured material phase may be included in a matrix of the flake graphite cast iron.

<Hardness> Equal to or higher than 90 HRB and equal to or lower than 105 HRB.

(1) FC300 Equivalent Material

<Composition> Composition containing C: equal to or more than 2.85% and equal to or less than 3.35%, Si: equal to or more than 1.95% and equal to or less than 2.55%, Mn: equal to or more than 0.45% and equal to or less than 0.8%, P: equal to or more than 0.03% and equal to or less than 0.25%, S: equal to or less than 0.15%, Cr: equal to or more than 0.15% and equal to or less than 0.55%, Mo: equal to or more than 0.15% and equal to or less than 0.65%, and Ni: equal to or more than 0.15% and equal to or less than 0.65% in mass%, the remaining Fe, and inevitable impurities. Moreover, this composition may include at least one element of B, Cu, Nb, W, and the like.

<Size of Graphite and the Like> The size of graphite is not particularly limited, andmaybe, for example, 4 to 8 (ISO 945-1:2008). Moreover, a cured material phase may be included in a matrix of the flake graphite cast iron.

<Hardness> Equal to or higher than 100 HRB and equal to or lower than 115 HRB.

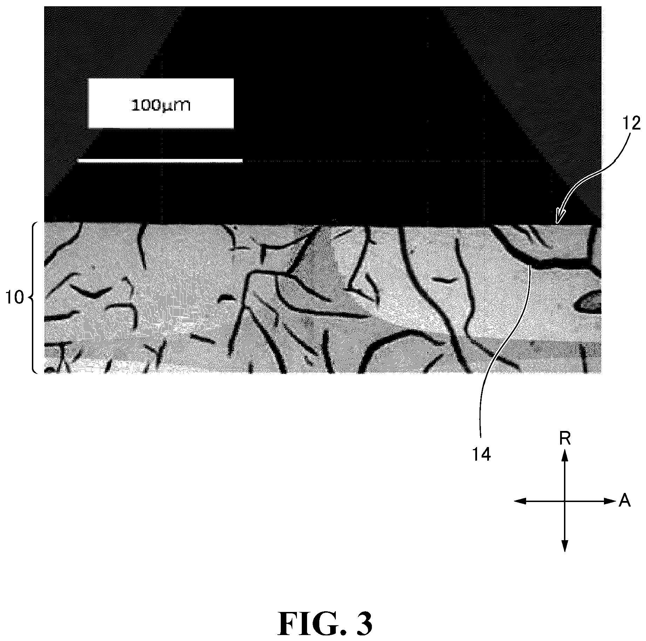

A precipitation form of the flaky graphite in the matrix is not particularly limited. However, as in a metallurgical microscope photograph as exemplified in FIG. 3, it is preferred that deformation or curve toward the direction A by an external force such as cutting and grinding (including honing) not be observed in one graphite shape of precipitated graphite 14 directed from another end to one end in the surface of the inner peripheral sliding surface 12 in the direction R in a portion at the one end of the inner peripheral sliding surface 12, it is preferred that the precipitated graphite 14 be exposed on the inner peripheral sliding surface 12, and it is preferred that a plurality of precipitated graphite 14 be exposed to the inner peripheral sliding surface 12. FIG. 3 is the metallurgical microscope photograph (magnification: 400x) showing an example of a sectional structure adjacent to the inner peripheral sliding surface 12 of the cylinder liner 10 of this embodiment. In the photograph, A indicates the axial direction of the cylinder liner 10, and R indicates a radial direction of the cylinder liner 10 in this state.

Moreover, the material forming the inner peripheral sliding surface 12 is also the cast iron (including the cast iron to which chemical conversion treatment has been applied) in the cylinder liner 10 according to this embodiment. That is, when the cylinder liner 10 according to this embodiment is used for the internal combustion engine, an outer peripheral surface of a piston and an outer peripheral sliding surface of a piston ring come in contact with and slide on the cast iron forming the inner peripheral sliding surface 12. Therefore, the hardness is higher in the case in which the material forming the inner peripheral sliding surface 12 is the cast iron compared with a case in which the material forming the inner peripheral sliding surface 12 is aluminum alloy, and thus is significantly advantageous with regard to the decrease in the friction coefficient (decrease in friction) and the increase in seizing resistance. Moreover, pores are not present in a vicinity of the inner peripheral sliding surface 12 in the case in which the material forming the inner peripheral sliding surface 12 is the cast iron compared with the case in which the inner peripheral sliding surface 12 is formed of a spray coating film, and thus a problem of peeling and crack does not occur.

In the cylinder liner 10 according to this embodiment, (i) an entire surface of the inner peripheral sliding surface 12 may have the same surface property, but (ii) when the inner peripheral sliding surface 12 may be partitioned into two or more regions, the surface properties of the respective regions may be different from each other. (i) In the first case, the entire surface of the inner peripheral sliding surface satisfies Expression (1) to Expression (3). Meanwhile, (ii) in the second case, at least one of the regions is only required to satisfy Expression (1) toExpression (3), and it is preferred that all the regions satisfy Expression (1) to Expression (3). These points also apply to suitable ranges of roughness parameters other than Rvk/Rk, Rk, (Rk-Rpk), which are parameters given by Expression (1) to Expression (3), and a suitable range of the cross-hatch angle. Moreover, when the inner peripheral sliding surface 12 is partitioned into two or more regions, the inner peripheral sliding surface 12 is generally partitioned into two or more regions with respect to the axial direction A. In consideration of productivity of the cylinder liner 10, it is preferred that (i) the entire surface of the inner peripheral sliding surface 12 have the same surface property. Moreover, (ii) when the inner peripheral surface 12 is partitioned into two or more regions, it is preferred that the inner peripheral sliding surface 12 be partitioned into two regions. When the inner peripheral sliding surface 12 is partitioned into three or more regions, the productivity of the cylinder liner 10 is liable to decrease significantly in some cases.

In this Description, a state in which "the entire surface of the inner peripheral sliding surface 12 has the same surface property" means that the values of (i) Rvk/Rk, (ii) Rk, and (iii) Rk-Rpk are the same on the entire surface of the inner peripheral sliding surface 12. Moreover, a case in which the machining mark constituted by the cross-hatch pattern is formed on the inner peripheral sliding surface 12, and "the entire surface of the inner peripheral sliding surface 12 has the same surface property" means (iv) the value of the cross-hatch angle is also the same on the entire surface of the inner peripheral sliding surface 12 in addition to (i) to (iii) described above. In this state, "the value is the same" means not only a case in which (a) respective measurement values measured at a plurality of freely selected locations on the entire surface of the inner peripheral sliding surface 12 are the same, but also a case in which (b): when respective measurement values measured at a plurality of freely selected locations on the entire surface of the inner peripheral sliding surface 12 are different from each other, these respective measurement values are within a range of measurement variation.

Moreover, when only a part of regions of the inner peripheral sliding surface 12 satisfies Expression (1) to Expression (3), it is preferred that a ratio of the regions satisfying Expression (1) to Expression (3) be equal to or higher than 33.3%, more preferably equal to or higher than 66.7%, further more preferably equal to or hither than 80% when the entire surface of the inner peripheral sliding surface 12 is equal to 100%.

Further, when only a part of the regions of the inner peripheral sliding surface 12 satisfies Expression (1) to Expression (3), the inner peripheral sliding surface 12 is partitioned into two or more regions with respect to the axial direction A, and the length of the cylinder liner 10 in the axial direction A is L, it is preferred that a region corresponding to a length equal to or longer than L/3 satisfy Expression (1) to Expression (3), it is more preferred that a region corresponding to a length equal to or longer than 2L/3 satisfy Expression (1) to Expression (3), and it is further more preferred that a region corresponding to a length equal to or longer than 4L/5 satisfy Expression (1) to Expression (3). Moreover, in this case, it is preferred that the region satisfying Expression (1) to Expression (3) be positioned in a vicinity of the center portion in the axial direction A. For example, when the region corresponding to the length equal to or longer than L/3 satisfies Expression (1) to Expression (3), a position on a side of the one end of the cylinder liner 10 in the axial direction A is 0, and a position on a side of the another end is L, it is preferred that Expression (1) to Expression (3) be satisfied in a region within a range equal to or larger than L/3 and equal to or smaller than 2L/3, or a region slightly shifted toward the one end side or the another end side of the region within a range equal to or larger than L/3 and equal to or smaller than 2L/3.

(i) When the entire surface of the inner peripheral sliding surface 12 has the same surface property, the roughness of the surface of the inner peripheral sliding surface 12 is an average value obtained through measurements at four locations per sample. In this case, specific measurement positions for the surface roughness are described later in a section "2. Measurement of Surface Roughness (Rk, Rvk, Rpk, and Ra)". Meanwhile, when (ii) the inner peripheral sliding surface 12 is partitioned into two or more regions, and the surface properties of the respective regions are different from each other, the surface roughness is an average value of the measurements at four locations in each of the regions . In this case, the average value of the surface roughness is obtained in each of the regions. In this case, the measurement positions are appropriately selected in accordance with a contour shape of each of the regions, and distances between the two measurement positions adjacent to each other and distances between the respective measurement positions and the contour line of the region are set so as to be approximately the same with each other as much as possible . For example, when the contour shape of the region is a rectangular shape, four intersections between two straight lines vertically dividing the region into three equivalent parts and two straight lines horizontally dividing the region into three equivalent parts are set to the measurement positions.

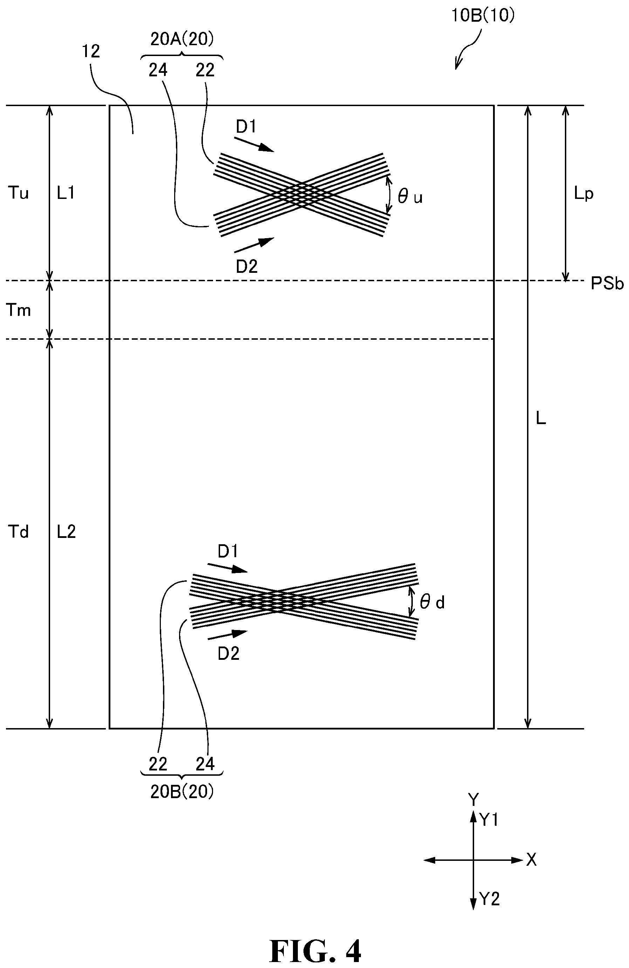

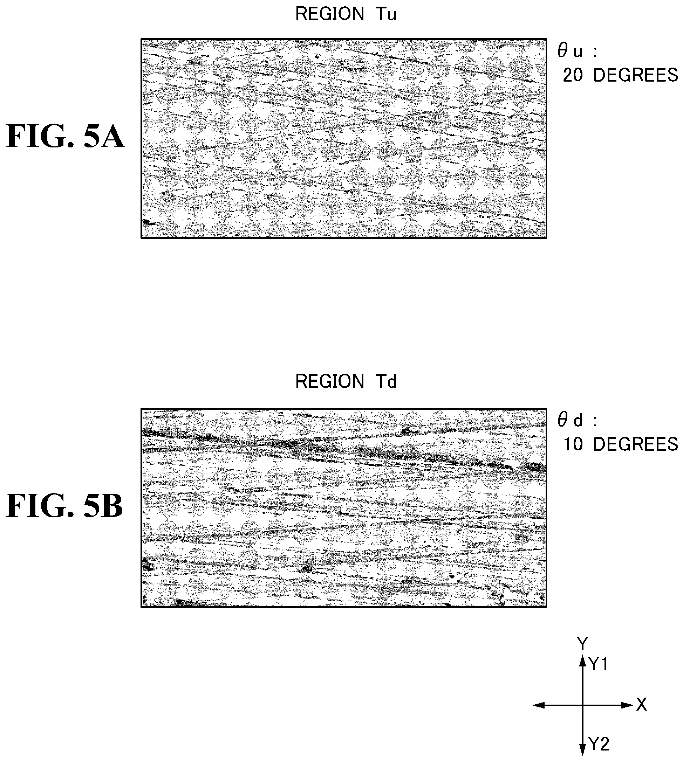

FIG. 4 is a schematic view for illustrating another example of the cylinder liner according to this embodiment, and is a developed plan view obtained by cutting the cylinder liner 10 along the axial direction A at one point in the circumferential direction C of the cylinder liner 10, to thereby develop the inner peripheral sliding surface 12 in the cylindrical shape on a plane. A symbol Y in FIG. 4 is a direction parallel with the center axis A of the cylinder liner 10. A symbol X is a direction parallel with the circumferential direction C of the cylinder liner 10. Moreover, when the cylinder liner 10 is arranged in an internal combustion engine, a Y1 direction side means a combustion chamber side, and a Y2 direction side means a crank chamber side. These points also apply to FIGS. 5 described later. In the example illustrated in FIG. 4, a machining mark constituted by a cross-hatch pattern is formed on an entire surface of the inner peripheral sliding surface, but only a part of the machining mark constituted by the cross-hatch pattern is illustrated for ease of description of the cross-hatch pattern and a cross-hatch angle.

The inner peripheral sliding surface 12 of the cylinder liner 10B (10) illustrated in FIG. 4 is partitioned into three regions in the axial direction A (Y direction) . A region Tu, a region Tm, and a region Td are provided from the combustion chamber side (Y1 direction side) toward the crank chamber side (Y2 direction side). In the example illustrated in FIG. 4, any of the regions Tu, Tm, and Td can satisfy Expression (1) to Expression (3).

When the length of the cylinder liner 10B in the axial direction A is L in this state, the length of the region Tu is L1, and the length of the region Td is L2. Moreover, a dotted line PSb indicates a bottom end position of a piston skirt when a piston (not shown) reaches a top dead center position in FIG. 4. A distance from an end on a combustion chamber side of the inner peripheral sliding surface 12 to the dotted line PSb is Lp in the Y direction in this state. Although L1=Lp in FIG. 4, L1 may not be equal to Lp.

Moreover, a machining mark 20A (20) constituted by a first cross-hatch pattern having a cross-hatch angle θu is formed in the region Tu. A machining mark 20B (20) constituted by a second cross-hatch pattern having a cross-hatch angle θd is formed in the region Td. Further, the region Tm is a middle region between the region Tu and the region Td, and the machining mark 20A constituted by the first cross-hatch pattern and the second machining mark 20B constituted by the second cross-hatch pattern are formed so as to overlap each other.

The surface properties and the lengths L, L1, L2, and Lp of the regions Tu, Td, and Tm can appropriately be selected in accordance with design specifications of the internal combustion engine that uses the cylinder liner 10B. As an example, when three piston rings (a top ring, a second ring, and an oil ring) are mounted to one piston, such a setting that L1=0.2L to 0.4L, Lp≤L1, and L2≥0.55L can be provided on the assumption that a relationship L>L1+L2 is satisfied. The relationship of L2≥0.55L is set in consideration of L2 being in a position corresponding to an approximate center in a slide range of the top ring in the Y direction. Moreover, friction states in the respective regions during the operation of the internal combustion engine are such that the friction state in the region Tu relatively tends to be in the boundary lubrication state or the mixed lubrication state, and the friction state in the region Td relatively tends to be in the mixed lubrication state or the hydrodynamic lubrication state.

As a specific example of the cylinder liner 10B illustrated in FIG. 4, for example, an example described below can be given. The surface property of the region Tm is an intermediate surface property between the region Tu and the region Td.

<Surface Property of Region Tu>

$$Ra=0.11 \ \mu m$$

$$Rk=0.21 \ \mu m$$

$$Rpk=0.09 \ \mu m$$

$$Rvk=0.29 \ \mu m$$

$$Rvk/Rk=1.38$$

$$Rk-Rpk=0.12 \ \mu m$$

$$\theta u=20 \ degrees$$

<Surface Property of Region Td>

$$Ra=0.19 \ \mu m$$

$$Rk=0.28 \ \mu m$$

$$Rpk=0.10 \ \mu m$$

$$Rvk=0.56 \ \mu m$$

$$Rvk/Rk=2.00$$

$$Rk-Rpk=0.18 \ \mu m$$

$$\theta d=10 \ degrees$$

With regard to a specific example described above for a reference, FIGS. 5 are metallurgical microscope photographs (magnification: 100x) of a replica of the machining marks constituted by the cross-hatch patterns formed on the inner peripheral sliding surface 12 by means of the sump method, and FIGS. 6 are charts for showing profiles of roughness curves when surface roughness of the inner peripheral sliding surface 12 was measured. FIG. 5(A) is a metallurgical microscope photograph of the region Tu. FIG. 5(B) is a metallurgical microscope photograph of the region Td. FIG. 6 (A) is a chart for showing an example of the profile of the roughness curve in the region Tu. FIG. 6(B) is a chart for showing an example of the profile of the roughness curve in the region Td.

When the cylinder liner 10B having the different surface properties in the respective regions Tu, Td, and Tm as exemplified in FIG. 4 to FIGS. 6 is manufactured, it is only required to execute the first fine honing step under a first honing condition in the region Tu, and to execute the first fine honing step under a second honing condition in the region Td. In this case, the region Tm is a region for switching from the first honing condition to the second honing condition. In the second fine honing step, the same honing condition only required to be used in the region Tu and the region Td.

The internal combustion engine according to this embodiment includes the cylinder bores, the pistons, and the piston rings. The cylinder bore includes an inner peripheral sliding surface made of the cast iron. The piston is arranged on an inner peripheral side of the cylinder bore. The piston ring is mounted to an annular groove provided along a piston circumferential direction on an outer peripheral surface of the piston. The inner peripheral sliding surface of the cylinder bore is characterized by including a region satisfying Expression (1) to Expression (3). According to this embodiment also in the internal combustion engine, the inner peripheral sliding surface of the cylinder bore and a forming method therefor can be similar to those for the cylinder liner of this embodiment described above.

Moreover, a structure of the internal combustion engine according to this embodiment is not particularly limited as long as the internal combustion engine includes the cylinder bores, the pistons, and the piston rings described above. For example, the internal combustion engine according to this embodiment may be an internal combustion engine including the cylinder liners made of the cast iron (cylinder liners according to this embodiment), and having the internal sliding surfaces containing the regions satisfying Expression (1) to Expression (3) or an internal combustion engine (internal combustion engine of a cylinder liner-less type) including a cast-iron cylinder block including cylinder bores having inner peripheral sliding surfaces containing regions satisfying Expression (1) to Expression (3).

The cross-hatch angle is defined as described below in the cylinder liner according to this embodiment. This definition is substantially applied also to the internal combustion engine according to this embodiment. However, the "cylinder liner circumferential direction" is replaced by the "cylinder bore circumferential direction" in a more strict sense in the following definition in the internal combustion engine according to this embodiment. The "cylinder bore circumferential direction" has the same meaning as the "cylinder liner circumferential direction" in the internal combustion engine including the cylinder liners in this configuration, and has a literal meaning in the internal combustion engine of the cylinder liner-less type including the cylinder bores.

"Definition of cross-hatch angle" : an angle formed by the direction toward which the first parallel line group extends from the one side to another side in the cylinder liner circumferential direction and the direction toward which the second parallel line group extends from the one side to the another side in the cylinder liner circumferential direction.

The internal combustion engine including the cylinder liners according to this embodiment includes at least the pistons, the piston rings, the cylinder liners according to this embodiment, and holding/fixing members. The holding/fixing member is configured to directly hold and fix the cylinder liner. In this case, the cylinder bore having the inner peripheral sliding surface made of the cast iron is formed of the cylinder liner according to this embodiment. Moreover, as a typical example of the holding/fixing member, a cylinder block into which the cylinder liners are insert-casted can be given. In a series of manufacturing process for the internal combustion engine including the cylinder liners according to this embodiment, a timing of forming the inner peripheral sliding surface containing the regions satisfying Expression (1) to Expression (3) in the honing step is not particularly limited, and can appropriately be selected. In the typical internal combustion engine including the cylinder block into which the cylinder liners are insert-casted, the formation of the inner peripheral sliding surfaces in the honing step is generally performed after an insert-cast step of insert-casting the cylinder liners (for example, JP 2860537 B2 and JP 4954644 B2). Thus, when the internal combustion engine including the cylinder liners according to this embodiment further includes the cylinder block into which the cylinder liners are insert-casted, it is preferred that the inner peripheral sliding surface containing the regions satisfying Expression (1) to Expression (3) be formed at a similar timing.

Meanwhile, the internal combustion engine of the cylinder liner-less type is an internal combustion engine in which the inner peripheral sliding surfaces containing the regions satisfying Expression (1) to Expression (3) are formed by directly honing inner peripheral surfaces (inner peripheral surfaces made of the cast iron material, which is the same cast iron material as that of the cast-iron cylinder block) of the cylinder bores provided for the cast-iron cylinder block without using cylinder liners. As the cast iron forming the cast-iron cylinder block used for the internal combustion engine of the cylinder liner-less type according to this embodiment, any of publicly-known cast irons such as the flake graphite cast iron and the vermicular graphite cast iron can be used.

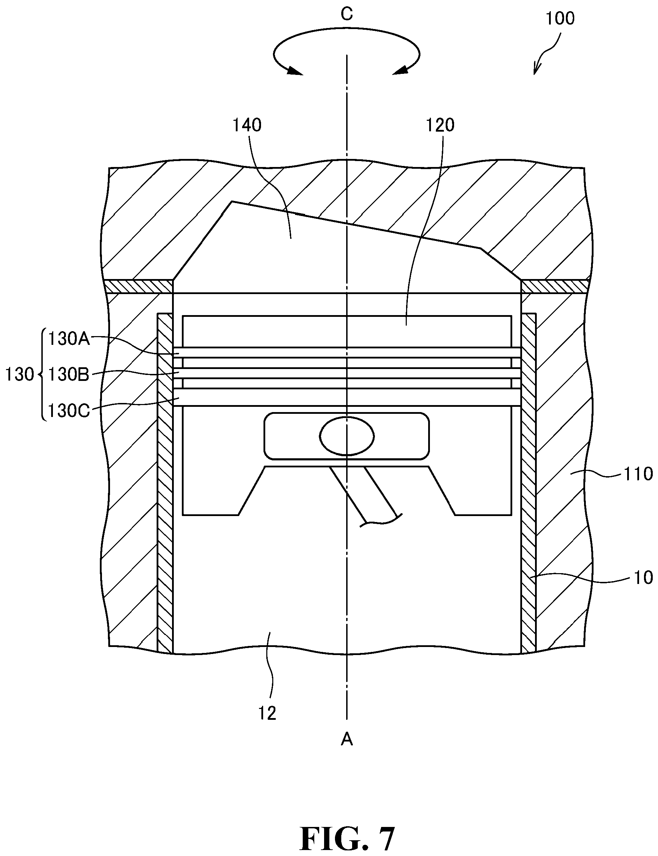

A description is now given of the internal combustion engine including the cylinder liners according to this embodiment as a specific example of the internal combustion engine according to this embodiment with reference to drawings. FIG. 7 is a schematic view for illustrating an example of the internal combustion engine 100 according to this embodiment. The cylinder liner 10, the cylinder block 110, and the combustion chamber 140 are illustrated in a sectional view. The piston 120 and the piston rings 130 arranged on the inner peripheral side of the cylinder liner are illustrated in a side view. Moreover, reference symbol A indicates the center axis of the cylinder liner, and reference symbol C indicates the circumferential direction of the cylinder liner 10. In FIG. 7, description is omitted for machining marks such as cross-hatch patterns formed on the inner peripheral sliding surface 12 of the cylinder liner 10.

The internal combustion engine 100 illustrated in FIG. 7 includes the cylinder block 110, the cylinder liner 10, the piston 120, and the three piston rings 130. The cylinder liner 10 is casted into the cylinder block 110. The piston 120 is arranged on the inner peripheral side of the cylinder liner 10. The piston rings 130 are mounted to the annular grooves provided along the circumferential direction of the piston on the outer peripheral surface of the piston 120. The three piston rings 130 are arranged in the order of a top ring 130A, a second ring 130B, and an oil ring 130C from the side of the combustion chamber 140. In the example illustrated in FIG. 7, a top end side of the cylinder liner 10 is also covered with the cylinder block 110, but a vicinity of a top end portion or a vicinity of a bottom end portion of the cylinder liner 10 may not be covered with the cylinder block 110. Moreover, the internal combustion engine 100 may have such a structure that the outer peripheral surface of the cylinder liner 10 is not covered with the cylinder block 110, and can be in direct contact with coolant, which is often employed in a diesel engine.

Moreover, in the example illustrated in FIG. 7, the top ring 130A, the second ring 130B, and the oil ring 130C are used as the piston rings 130, but at least one type of these only required to be used. As sectional shapes of the piston rings 130, in the example illustrated in FIG. 7, the top ring 130A may have any one of a rectangular sectional shape, a sectional shape of an internally beveled ring, and a sectional shape of full keystone ring. In the example illustrated in FIG. 7, the second ring 130B may have any one of a rectangular sectional shape, such a sectional shape that the outer peripheral surface has a tapered surface opened toward the side of the combustion chamber 140, and such a sectional shape having an undercut on the outer peripheral surface on a side away from the side of the combustion chamber 140. Moreover, as the oil ring 130C, for example, a combination steel oil ring, a slotted oil control ring, and a beveled oil control ring may be used, and an oil ring with a coil expander other than these oil rings can also be used.

The piston ring 130 may be formed of only a ring-shaped base material, but preferably includes the ring-shaped base material and a hard coating film that covers an outer peripheral surface of the ring-shaped base material, and is in contact with and is slidable on the inner peripheral sliding surface 12 of the cylinder liner 10. As this hard coating film, a CrN-based coating film, an amorphous carbon coating film, and the like can be exemplified, and the amorphous carbon coating film may not contain hydrogen. These coating films can be formed by means of the physical vapor deposition (PVD) method such as sputtering method and the arc ion plating method.

The CrN-based coating film may further contain other metal elements other than Cr as required. Moreover, as the non-metal element, one or more types of other non-metal elements may be contained in addition to N. Such other non-metal elements, the oxygen O or the carbon C is suitable. Moreover, the amorphous carbon coating film not containing the hydrogen is a coating film not substantially containing the hydrogen. However, it is permitted that the amorphous carbon coating film not containing the hydrogen inevitably contain impurity hydrogen caused by carbon target used for the coating film forming and impurity hydrogen caused by a gas component (water molecule) containing the hydrogen adhering to an inner wall of a coating film forming chamber. Further, the amorphous carbon coating film not containing the hydrogen may be an DLC coating film (a-C layer) having an amorphous carbon structure, an DLC coating film (ta-C layer) having a tetrahedral carbon structure, or a multi-layer structure obtained by alternately laminating both thereof. When the amorphous carbon coating film not containing the hydrogen has the multi-layer structure, it is preferred that a coating film thickness be equal to or thicker than 2 $\mu$m. Moreover, an adhesive layer such as a Ti coating film may be provided between an outer peripheral surface of a ring-shaped base material and the amorphous carbon coating film not containing the hydrogen.

It is preferred that the arithmetic average roughness Ra of the outer peripheral sliding surface of these hard coating films be equal to or lower than 0.10 $\mu$m, more preferably equal to or lower than 0.06 $\mu$m. It is possible to prevent scratches from occurring to the inner peripheral sliding surface 12 of the cylinder liner 10 by setting the arithmetic average roughness Ra to be equal to or lower 0.10 $\mu$m. A lower limit value of the arithmetic average roughness Ra of the outer peripheral sliding surface of the hard coating film is not particularly limited, and it is preferred that the lower limit value of the arithmetic average roughness Ra of the outer peripheral sliding surface of the hard coating film be equal to or higher than 0.01 um in practice. An outer peripheral lapping or buffing using fine honing grains as a medium can be used so that the outer peripheral sliding surface of the piston ring 130 has a desired surface roughness.

When the outer peripheral sliding surface of the piston ring 130 is formed of the CrN-based coating film, it is preferred that the surface hardness in the outer peripheral sliding surface based on JIS Z 2244:2009 be equal to or higher than 800 HV0.1. When the outer peripheral sliding surface of the piston ring 130 is formed of the amorphous carbon coating film not containing the hydrogen, it is preferred that the surface hardness in the outer peripheral sliding surface based on JIS Z 2244:2009 be equal to or higher than 1200 HV0.1. A progress of the wear of the outer peripheral sliding surface of the piston ring 130 can be suppressed by setting the surface hardness to be equal to or higher than the above-mentioned value in the hard coating film. Therefore, it is possible to suppress an occurrence of an increase in contact length between the inner peripheral sliding surface 12 of the cylinder liner 10 and the outer peripheral sliding surface of the piston ring 130 in the axial direction A of the cylinder liner 10 for a long period. A lubrication hydraulic force between the cylinder liner 10 and the piston ring 130 is likely to be generated, and a metal contact can thus be avoided, thereby also suppressing the increase in friction coefficient. An upper limit of the surface hardness is not particularly limited, but it is preferred that the surface hardness be equal to or lower than 2,000 HV0.1 for the CrN-based coating film, and be equal to or lower than 2,500 HV0.1 for the amorphous carbon coating film not containing the hydrogen in practice.

Moreover, from a perspective of the reduction in friction coefficient, in the internal combustion engine 100 according to this embodiment, it is preferred to use a combination of the cylinder liner 10 made of the flake graphite cast iron having the composition and the hardness of the FC300 equivalent material and the piston ring 130, which is covered with the amorphous carbon coating film not containing the hydrogen in the outer peripheral surface of the ring-shaped base material.

Moreover, in the internal combustion engine 100 according to this embodiment, a surface pressure when the piston 130 and the cylinder liner 10 come in contact with each other may be reduced in order to further increase the seizing resistance. The surface pressure can be controlled by tensile forces of the piston rings 130. For example, when the internal combustion engine 100 is a gasoline engine, a total tensile force (tangential tensile force) per cylinder of the piston rings 130 is Ft (unit: N (newton)), and an inner diameter (bore diameter) of the cylinder liner 10 is D (unit: mm), it is preferred that Ft/D be equal to or lower than 0.5, more preferably equal to or lower than 0.4, further more preferably equal to or lower than 0.3. A lower limit of Ft/D is not particularly limited, and it is preferred that the lower limit of Ft/D be equal to or higher than 0.25 in practice.

It should be understood that the above-mentioned piston rings 130 and the value of Ft/D can be applied to the internal combustion engine of the cylinder liner-less type.

Examples

The present invention is specifically described below by way of Examples, but the present invention is not limited to Examples.

1. Production of Cylinder Liner

Cylinder liners in respective examples and comparative examples were produced by the following procedure. First, a cylindrical member made of the cast iron was produced by the centrifugal casting. On this occasion, cylindrical members made of the following two types of cast iron materials (flake graphite cast iron) LA and LB were produced. The same centrifugal casting conditions were used independently of the type of the cast iron material.

[LA]

Composition containing C: 3.66%, Si: 2.41%, Mn: 0.54%, P: 0.12%, S: 0.0042%, and Cr: 0.08% in mass%, the remaining Fe, and inevitable impurities.
Hardness: 90 HRB

[LB]

Composition containing C: 2.87%, Si: 2.01%, Mn: 0.74%, P: 0.24%, S: 0.041%, Cr: 0.52%, Mo: 0.64%, and Ni: 0.63% in mass%, the remaining Fe, and inevitable impurities.
Hardness: 115 HRB

The rough boring step and the fine boring step were applied in this order to the cylindrical members obtained by the centrifugal casting. Then, honing was applied.

The rough honing step, the first fine honing step, and the second fine honing step were applied in this order to the cylindrical members used for the production of the cylinder liners in the examples and the comparative examples in this state. Main honing conditions for the respective steps are described below.

Three types of diamond honing stones were prepared in the first fine honing step. In this state, for production of cylinder liners in the examples and the comparative examples, the reduced valley depth Rvk of the finished inner peripheral sliding surfaces of each of which satisfies any one of the following levels of (1) to (3), different types of diamond honing stones were assigned to and used for the respective levels.

$$(1) \quad Rvk \leq 0.5 \mu m$$

$$(2) \quad 0.5 \mu m < Rvk \leq 1.2 \mu m$$

$$(3) \quad 1.2\mu m < Rvk \leq 2.0\mu m$$

Four types of diamond honing stones were prepared in the second fine honing step. In this state, for production of cylinder liners in the examples and the comparative examples, the core roughness depth Rk of the finished inner peripheral sliding surfaces of each of which satisfies any one of the following levels of (1) to (4), different types of diamond honing stones were assigned to and used for the respective levels.

(1) Examples A1 to A10 and B1 to B10 and Comparative Examples A3, A4, B3, and B4 in which the core roughness depth Rk is equal to or lower than 0.12 um
(2) Examples A11 to A19 and B11 to B19 in which the core roughness depth Rk is equal to or higher than 0.16 um and equal to or lower than 0.20 um
(3) Examples A20 to A31 and B20 to B31 and Comparative Examples A1, A2, B1, and B2 in which the core roughness depth Rk is equal to or higher than 0.25 um and equal to or lower than 0.33 um
(4) Comparative Examples A5 and B5 in which the core roughness depth Rk is equal to or more than 0.4 um

Then, desired surface properties (values of Rk, Rvk, and Rpk) were obtained by first setting a spindle rpm and a spindle vertical speed for attaining each of cross-hatch angles 3°, 30°, and 50° respectively in the first fine honing step and the second fine honing step, and then appropriately selecting expansion pressures for these diamond honing stones respectively in the first fine honing step and the second fine honing step. The cross-hatch angles in the first fine honing step and the second fine honing step were the same. The entire inner peripheral surfaces of the cylindrical members were honed under the same honing conditions.

Moreover, conditions for the spindle rpm, the spindle vertical speed, and the grinding liquid (water-soluble grinding liquid) were the same in all the examples and comparative examples in steps described in (a), (b), (c1), and (c2) described below.

(a) Rough Honing Step (All Examples and Comparative Examples)

· Honing stones: One type of diamond honing stones R (binding material was metal bond)
An average grain diameter R of the diamond honing stones R was 125 um
· Cross-hatch angles: 3°, 30°, and 50° (the same as the cross-hatch angles of the finished inner peripheral sliding surfaces)

(b) First Fine Honing Step (All Examples and Comparative Examples)

· Honing stones: Three types of diamond honing stones A1, A2, and A3 (binding material was metal bond) An average grain diameter A2 of the diamond honing stones A2 was approximately 1/3 of the average grain diameter R of the diamond honing stone used in the rough honing step, an average grain diameter A1 of the diamond honing stones A1 was a value smaller than the average grain diameter A2 by approximately 10 um, and an average grain diameter A3 of the diamond honing stones A3 was a value larger than the average grain diameter A2 by approximately 10 um. Moreover, the degree of binding of the metal bond for the diamond honing stones A1, A2, and A3 was lower than that of the metal bond for the diamond honing stones R used in the rough honing step.
· Cross-hatch angles: 3°, 30°, and 50° (the same as the cross-hatch angles of the finished inner peripheral sliding surfaces)

(c1) Second Fine Honing Step (applied only to All Examples and Comparative Examples A1 to A4, B1 to B4)

· Honing stones: Three types of diamond honing stones B1, B2, and B3 (binding material was metal bond) An average grain diameter B2 of the diamond honing stones B2 was approximately 1/3 of the average grain diameter A2 of the diamond honing stone A2 used in the first honing step, an average grain diameter B1 of the diamond honing stones B1 was a value smaller than the average grain diameter B2 by approximately 5 um, and an average grain diameter B3 of the diamond honing stones B3 was a value larger than the average grain diameter B2 by approximately 5 um. Moreover, the degree of binding of the metal bond for the diamond honing stones B1, B2, and B3 was lower than that of the metal bond for the diamond honing stones A1, A2, and A3 used in the first honing step.
· Cross-hatch angles: 3°, 30°, and 50° (the same as the cross-hatch angles of the finished inner peripheral sliding surfaces)

(c2) Second Fine Honing Step (applied only to Comparative Examples A5 and B5)

· Honing stones: One type of diamond honing stones C (binding material was metal bond)
An average grain diameter C of the diamond honing stones C was a value larger than approximately 1/3 of the average grain diameter A2 of the diamond honing stones A2 used in the first fine honing step by approximately 10 um. Moreover, the degree of binding of the metal bond for the diamond honing stones C was lower than that of the metal bond for the diamond honing stones A2 used in the first fine honing step.
· Cross-hatch angles: 3°, 30°, and 50° (the same as the cross-hatch angles of the finished inner peripheral sliding surfaces)

(c3) Second Fine Honing Step (applied only to Comparative Example A6)

The second fine honing step was performed as in Example A21 except for that diamond honing stones B3 were used, and the expansion pressure for the diamond honing stones B3 was slightly lower than that in Example A21.

(c4) Second Fine Honing Step (applied only to Comparative Example B6)

The second fine honing step was performed as in Example B21 except for that diamond honing stones B3 were used, and the expansion pressure for the diamond honing stones B3 was slightly lower than that in Example B21.

(c5) Second Fine Honing Step (applied only to Comparative Example A7)

The second fine honing step was performed as in Example A3 except for that diamond honing stones B1 were used, and the expansion pressure for the diamond honing stones B1 was slightly higher than that in Example A3.

(c6) Second Fine Honing Step (applied only to Comparative Example B7)

The second fine honing step was performed as in Example B3 except for that diamond honing stones B1 were used, and the expansion pressure for the diamond honing stones B1 was slightly higher than that in Example B3.
A set of three types of cylinder liners, which are the same in the values of Rk, Rvk, and Rpk, and are different from each other only in the cross-hatch angle, were prepared in the respective examples and comparative examples. The three types of cylinder liners, which are the same in the values of Rk, Rvk, and Rpk, and are different from each other only in the cross-hatch angle, were honed under the same honing conditions except for such a point that honing conditions that determine the cross-hatch angles were different from each other, and the expansion pressures of the honing stones were adjusted.
In a description given below, one test example number (such as "ExampleA1") is assigned to samples different in cross-hatch angle from each other, but the same in the values of Rk, Rvk, and Rpk for convenience. Moreover, when a description is given of a case in which samples having the one test example number, and different cross-hatch angles are distinguished from each other, a notation meaning the cross-hatch angle and the like are added after the test example number. For example, when a sample has a cross-hatch angle of 3 degrees in Example A1, the sample is denoted as "Example A1 (CHA3)" .
The cylinder liners in Examples A1 to A31 and Comparative Examples A1 to A7 and in Examples B1 to B31 and Comparative Examples B1 to B7 were obtained through the procedure described above. An inner diameter dimension and a length in the axial direction of the cylinder liners in the respective examples and comparative examples were respectively 86 mm and 86 mm. The material forming the inner peripheral sliding surfaces was the cast iron. The cylinder liners in the respective examples and comparative examples were machined into test pieces having appropriate shapes and sizes as required for various measurements and tests described later.
The respective cylinder liners in Examples A1 to A31 and the respective cylinder liners in Examples B1 to B31 are different from each other only in the type of the cast iron material used for the casting, and are the same in the surface property. Similarly, the respective cylinder liners in Comparative Examples A1 to A7 and the respective cylinder liners in Comparative Examples B1 to B7 are different from each other only in the type of the cast iron material used for the casting, and are the same in the surface property.

2. Measurement of Surface Roughness (Rk, Rvk, Rpk, And Ra)

A stylus type surface roughness measuring instrument (SURFCORDER SE-3500) from Kosaka Laboratory Ltd. was used for the measurement of the surface roughness (Rk, Rvk, Rpk, and Ra), and PU-DJ2S (tip radius is 2 $\mu$m, and taper angle of a cone is 60 degrees) was used as a pick-up (stylus) . A reference length l (l is the lower case of L) for measuring Ra is 0.8 mm. An evaluation length ln (l is the lower case of L) for measuring Rk, Rvk, and Rpk is 4.0 mm. The stylus was scanned in the axial direction of the cylinder liner for the measurement of the surface roughness.

Measurement positions for measuring the surface roughness of each of the inner peripheral sliding surfaces of the cylinder liners in the respective examples and the Comparative Examples were four locations in total described in the following (a) and (b) while a freely selected position of the cylinder liner in the circumferential direction is 0 degree. Then, average values of the surface roughness of the measurement positions at these four locations were obtained. These average values were considered as the surface roughness of the inner peripheral sliding surface of the cylinder liners in the respective examples and comparative examples shown in Table 1 to Table 4.

(a) Positions at 0 degrees and 180 degrees displaced by 15 mm from the one end side of the cylinder liner in the axial direction.
(b) Positions at 90 degrees and 270 degrees in the center portion of the cylinder liner in the axial direction.

For Rk, Rvk, and Rpk, the average values of the measurements at the four locations in total indicated by (a) and (b) were obtained for each of the samples different from each other in the cross-hatch angle in one test example. It was confirmed that the average values of each of Rk, Rvk, and Rpk matched each other among the samples different in cross-hatch angles. For measurement of friction coefficients (friction coefficient A and friction coefficient B) and evaluation of the seizing resistance of one type of cross-hatch angle in one test example, which is described later in detail, three out of nine test pieces cut out from the one cylinder liner were used for each of the measurements and the evaluation.

For a reference, FIG. 8(A) is a chart for showing an example of a profile of a roughness curve of the inner peripheral sliding surface of the cylinder liner in Example A1 (CHA30) is shown, FIG. 8(B) is a chart for showing an example of the profile of the roughness curve of the inner peripheral sliding surface of the cylinder liner in Example A14 (CHA30) is shown, and FIG. 8(C) is a chart for showing an example of the profile of the roughness curve of the inner peripheral sliding surface of the cylinder liner in Example A18 (CHA30) is shown. Vertical and horizontal magnifications of the curves shown in FIGS. 8 are respectively 10, 000x and 50x in FIG. 8(A), and 5,000x and 50x in FIGS. 8(B) and 8(C). Moreover, units of scales of the horizontal axis and the vertical axis are mm.

Moreover, measurement positions of the surface roughness of the outer peripheral sliding surface of the piston ring for the production of upper test pieces used for measurement of the friction coefficients by a reciprocating friction tester were three locations in total at 90 degrees, 180 degrees, and 270 degrees while the position of a gap is 0 degrees. An average value of the surface roughness at the three measurement positions was obtained, and this average value was considered as the surface roughness of the outer peripheral sliding surface of the piston ring.

Meanwhile, with regard to measurement positions for the surface roughness of an upper test piece having a semispherical distal end used for measurement of the seizing resistance by the reciprocating friction tester, in a vicinity of the distal end of the upper test piece covered with hard chromium plating, while a freely selected position in the circumferential direction was set to 0 degrees, an average value of two locations in total in a direction from 0 degrees to 180 degrees through a tip of the distal end and in a direction from 90 degrees to 270 degrees through the tip of the distal end was used.

3. Measurement of Friction Coefficients

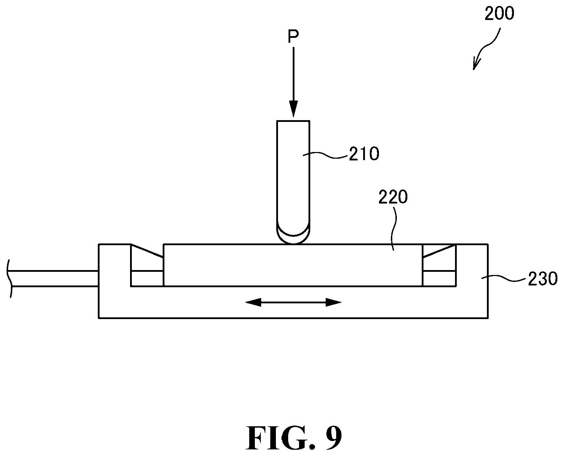

The friction coefficient when the inner peripheral sliding surface of the cylinder liner in each of the respective examples and comparative examples and the outer peripheral sliding surface of the piston ring were brought in contact with and were slid on each other was measured through use of the reciprocating friction tester illustrated in FIG. 9. The reciprocating friction tester 200 illustrated in FIG. 9 is configured such that an upper test piece 210 is pressed against a lower test piece 220 in a plate shape thorough application of a load P by a spring load, and both of the test pieces slide on each other by a reciprocating motion of the lower test piece 220. Moreover, the lower test piece 220 is fixed to a top surface of a holding base 230. The upper test piece 210 and the lower test piece 220 used for the measurement of the friction coefficient were prepared through the following procedure.

<Production of Upper Test Pieces>

The piston ring used for production of the upper test piece 210 includes a ring-shaped base material and a hard coating film covering an outer peripheral surface of the ring-shaped base material. A nominal diameter of the piston ring is 72.5 mm. A width (a length in a direction of a reciprocating motion of the piston when the piston ring is mounted on the piston) is 1.2 mm. An outer circumference shape of the outer peripheral sliding surface is a barrel face. A material forming the ring-shaped base material is a JIS SUS440B equivalent material. As the upper test piece 210, a member cut out along the circumferential direction at a length of 20 mm was used. The three upper test pieces 210 cut out from the same piston ring were prepared for the measurement of the friction coefficients for each of the tree types of cross-hatch angles in the respective examples and comparative examples.

Moreover, as the hard coating film (corresponding to the coating film forming the sliding surface of the upper test piece 210) of the piston ring, the following two types of hard coating films RA and RB were used. Thus, when the friction coefficients were measured, the two types of an upper test piece 210 using the hard coating film RA and an upper test piece 210 using the hard coating film RB were used.

[RA]

The hard coating film RA is a CrN coating film. For 72 piston rings used for the test, the surface hardness of the hard coating film RA was 800 HV0.1 to 850 HV0.1, the arithmetic average roughness Ra of the outer peripheral sliding surface was 0.04 um to 0.06 um, and the coating film thickness was 17 um to 20 um. The coating film RA was formed on the outer peripheral surface of the ring-shaped base material by an arc ion plating device using a Cr target by means of the arc ion plating, which is one type of the PVD method. As process gas for film forming, only $N_2$ gas was used. The hard coating film RA for the 72 piston rings used for the test has the same treatment.

[RB]

The hard coating film RB is an amorphous carbon coating film not containing the hydrogen. For 70 piston rings used for the test, the surface hardness of the hard coating film RB was 1,200 HV0.1 to 1,250 HV0.1, the arithmetic average roughness Ra of the outer peripheral sliding surface was 0.03 um to 0.06 um, and the coating film thickness of the hard coating filmRB itself excluding an adhesive layer is 5 um to 6 pm. The coating film RB was formed on the outer peripheral surface of the ring-shaped base material through the following procedure. First, a Ti coating film is formed as the adhesive layer by the PVD method. Then, a DLC coating film (a-C layer) having the amorphous carbon structure was formed on the Ti coating film by sputtering in an argon ion atmosphere by using a C target. Further, a DLC coating film (ta-C layer) having the tetrahedral carbon structure was formed on the a-C layer by the filtered arc ion plating. These two layers were alternately and repeatedly laminated. The outer most surface was the DLC coating film (ta-C layer) having the tetrahedral carbon structure. The hard coating film RB for the 70 piston rings used for the test has the same treatment.

<Production of Lower Test Pieces>

A set of three types of cylinder liners, which were the same in the values of Rk, Rvk, and Rpk of the surface roughness, and were different only in that the cross-hatch angle, were prepared in the respective examples and comparative examples for each of the two types LA and LB of cast iron materials. Six out of nine members cut out from one cylinder liner at 20 mm in length along the circumferential direction and at 60 mm in length along the axial direction while the inner peripheral sliding surface of the cylinder liner was considered as a reference were set as the lower test pieces 220 for the friction coefficient measurement. The first three of the six lower test pieces 220 were combined with the three upper test pieces 210 having the hard coating film RA so as to evaluate the friction coefficient. The remaining three of the six lower test pieces 220 were combined with the three upper test pieces 210 having the hard coating film RB so as to evaluate the friction coefficient. The remaining three lower test pieces 220 not used for the measurement of the friction coefficients were used for the evaluation of the seizing resistance described later.

<Sliding Conditions>

The friction coefficient was measured thorough detection of a friction force of the upper test piece 210 during sliding by a load cell. Detailed sliding conditions are described below.

- Distance of one reciprocating motion: 100 mm (a slide direction is the axial direction of the cylinder liner as that of an actual internal combustion engine)
- Speed: 300 cycle/min (average slide speed: 0.5 m/s)
- Load P: 30 N
- Used lubricating oil: GF-5, OW-20 (class: ILSAC standard, viscosity classification: SAE J300)
- Supply method for lubricating oil: 0.025 ml of lubricating oil was dropped every five minutes so as to supply to the sliding surface of the lower test piece 220

- Temperature of lower test piece 220: Room temperature

The used lubricating oil is lubricating oil of low fuel consumption type widely available in the market. The above-mentioned supply conditions of the lubricating oil were set so that the friction state between the upper test piece 210 and the lower test piece 220 was brought into the hydrodynamic lubrication state. This test was conducted three times for the combination of the upper test piece 210 and the lower test piece 220 of the same type. An average value of the friction coefficients obtained by the respective measurements was obtained as the friction coefficient of the cylinder liner of each of the respective examples and comparative examples.

4. Evaluation of Seizing Resistances

The seizing resistances when the inner peripheral sliding surface of the cylinder liner and the outer peripheral sliding surface of the piston ring in each of the respective examples and comparative examples were brought in contact with and were slid on each other were measured by the reciprocating friction tester illustrated in FIG. 9. An upper test piece 210 and a lower test piece 220 used for the measurement of the seizing resistance were prepared through the following procedure.

<Production of Upper Test Pieces>

As the upper test piece 210, a member to which hard chromium plating was applied at a distal end of a pin having a diameter of 8 mm made of a material equivalent to JIS SK5 was used. The distal end of the upper test piece 210 was a semispherical shape having a curvature radius of 18 mmR at the distal end. Three upper test pieces 210 were prepared for each of the cylinder liners different in cross-hatch angle in each of the respective examples and comparative examples. As a hard coating film forming the sliding surface of the upper test piece 210, the following hard coating film RC was used.

[RC]

The hard coating film RC is a hard chromium plating coating film (JIS H8615:1999 Electroplated coatings of chromium for engineering purposes). For 72 upper test pieces 210 used for the test, the surface hardness of the hard coating film RC was 800 HV0.1 to 840 HV0.1. A surface of the hard coating film RC was mirror-finished by buffing, and the plating thickness was 50 um to 54 um. The coating film RC was formed by electroplating. The hard coating film RC for the 72 upper test pieces 210 had the same treatment.

<Production of Lower Test Pieces>

The remaining lower test pieces 220 not used for the measurement of the friction coefficient out of the lower test pieces 220 produced for the measurement of the friction coefficient were used.

<Sliding Conditions>

The seizing resistance was evaluated as a period until a friction force of the upper test piece 210 detected by a load cell during sliding reaches 0.75 N (friction force corresponding to a friction coefficient of 0.3). Detailed sliding conditions are described below.

- Distance of one reciprocating motion: 100 mm (a slide direction is the axial direction of the cylinder liner as that of an actual internal combustion engine)
- Speed: 200 cycle/min (average sliding speed: 0.3 m/s)
- Load P: 2.5 N
- Used lubricating oil: bearing oil
- Supply method for lubricating oil: the lubricating oil was applied to the sliding surface of the lower test piece 220, and then was wiped off before the test started, and the lubricating oil adhering to the sliding surface after being wiped off was used for the test.
- Maximum test period: 45 minutes (when the friction force reached 0.75 N before the elapse of 45 minutes, the test was finished immediately)
- Temperature of lower test piece 220: Room temperature

The used lubricating oil (bearing oil) is low in viscosity than the general lubricating oil for the engine. Moreover, the above-mentioned supply conditions of the lubricating oil were set so that the friction state between the upper test piece 210 and the lower test piece 220 was brought into the boundary lubrication state. This test was conducted three times for the combination of the upper test piece 210 and the lower test piece 220 of the same type. In this state, when the friction force was smaller than 0.75 N when 45 minutes, which is the maximum test period, had elapsed in any of the tree tests, it was determined that "no scuffing". Moreover, when the friction force reached 0.75 N before 45 minutes, which is the maximum test period, had elapsed in at least one of the tree tests, an average value of periods when the test was finished in the respective times was considered as the evaluation result of the seizing resistance. In this case, the value was evaluated as a relative value (scuffing period ratio) to a reference value (100), which is the evaluation result of the seizing resistance at the cross-hatch angle of 50 degrees in Comparative Example A5.

It is preferred that the scuffing period ratio be equal to or higher than 85 in the evaluation result of the seizing resistance at any of the cross-hatch angles of 3 degrees, 30 degrees, and 50 degrees.

5. Evaluation Results of Friction Coefficient and Seizing Resistance

The materials, the surface roughness (Rk, Rvk, Rpk, and Ra) and the characteristic values (Rk+Rpk, Rvk/Rk, and Rk-Rpk) of the cylinder liners in the respective examples and comparative examples are shown in Table 1 to Table 4 and Table 14. In Table 1 to Table 4 and Table 14, Ra (CHA3) means an average value of arithmetic average roughness Ra measured at the four locations for the one sample having the cross-hatch angle is 3 degrees. Ra (CHA30) means an average value of arithmetic average roughness Ra measured at the four locations for the one sample having the cross-hatch angle of 30 degrees. Ra (CHA50) means an average value of arithmetic average roughness Ra measured at the four locations for the one sample having the cross-hatch angle of 50 degrees. Ra (CHA60) means an average value of arithmetic average roughness Ra measured at the four locations for the one sample having the cross-hatch angle of 60 degrees. Even when the parameters Rk, Rvk, and Rpk of the surface roughness are the same, but the cross-hatch angle changes, the arithmetic average roughness Ra changes.

Moreover, the measurement results and the evaluation results of the friction coefficients of the cylinder liners in the respective examples and comparative examples are shown in Table 5 to Table 8 and Table 15. The measurement results and the evaluation results of the seizing resistance of the cylinder liners in the respective examples and comparative examples are shown in Table 9 to Table 12 and Table 16. Evaluation criteria of evaluation results in fields of "Friction coefficient evaluation" shown in Table 5 to Table 8 and Table 15 and in fields of "Seizing resistance evaluation" shown in Table 9 to Table 12 and Table 16 are described below. "Friction coefficient A evaluation" means the case in which the coating film of the upper test piece 210 is RA. "Friction coefficient B evaluation" means the case in which the coating film of the upper test piece 210 is RB.

Further, for a reference, Table 13 shows a result of the evaluation results of the friction coefficient A (upper test coating film RA) and the friction coefficient B (upper test coating film RB) in Example A13 (CHA30) and the evaluation results of the friction coefficient A (upper test coating film RA) and the friction coefficient B (upper test coating film RB) in Example B13 (CHA 30), which are different from each other only in the type of the cylinder liner material, and rearranged in terms of the type of the cylinder liner material and the type of the upper test coating film.

- Evaluation Criteria for "Friction Coefficient Evaluation" -

A: Friction coefficient is equal to or lower than 0.09 at the cross-hatch angle of 50 degrees.
B: Friction coefficient is higher than 0.09 and equal to or lower than 0.10 at the cross-hatch angle of 50 degrees.
C: Friction coefficient is higher than 0.10 and equal to or lower than 0.11 at the cross-hatch angle of 50 degrees.
D: Friction coefficient is higher than 0.11 at the cross-hatch angle of 50 degrees.

- Evaluation Criterion for [Seizing Resistance Evaluation] -

A: All evaluation results are "no scuffing" in the evaluation of seizing resistance at the cross-hatch angles of 3 degrees, 30 degrees, and 50 degrees.
B: The worst evaluation result is equal to or higher than 90 in a scuffing period ratio in the evaluation of the seizing resistance at the cross-hatch angles of 3 degrees, 30 degrees, and 50 degrees.
C: The worst evaluation result is equal to or higher than 85 in a scuffing period ratio in the evaluation of the seizing resistance at the cross-hatch angles of 3 degrees, 30 degrees, and 50 degrees.
D: The worst evaluation result is less than 85 in a scuffing period ratio in the evaluation of the seizing resistance at the cross-hatch angles of 3 degrees, 30 degrees, and 50 degrees.

Various measurement/evaluation results of the cylinder liners in the examples common in the cylinder liner material, and the highest in a degree of similarity in roughness to Comparative Examples A6, A7, B6, and B7 are also extracted from Table 1 to Table 12, and shown in Table 14 to Table 16 in addition to various measurement/evaluation results of the cylinder liners in these respective comparative examples. That is, Examples A22 and A21 are also listed as comparison subjects of Comparative Example A6, Examples A3 and A4 are also listed as comparison subjects of Comparative Example A7, Examples B22 and B21 are also listed as comparison subjects of Comparative Example B6, and Examples B3 and B4 are also listed as comparison subjects of Comparative Example B7. Moreover, from a perspective of the degree of similarity in the surface roughness, the respective examples and comparative examples shown in Table 14 to Table 16 are classified into four groups.

<Group A1> Comparative Example A6 and Examples A22 and A21 Subject to Comparison Thereof
<Group 2A> Comparative Example A7 and Examples A3 and A4 Subject to Comparison Thereof
<Group 1B> Comparative Example B6 and Examples B22 and B21 Subject to Comparison Thereof
<Group 2B> Comparative Example B7 and Examples B3 and B4 Subject to Comparison Thereof

Table 1

| | Cylinder liner material | Surface roughness | | | | | | | Characteristic values | | |
|---|---|---|---|---|---|---|---|---|---|---|---|
| | | Rk | Rvk | Rpk | Ra (CHA3) | Ra(CHA30) | Ra(CHA50) | Ra(CHA60) | Rk+Rpk | Rvk/Rk | Rk-Rpk |
| | | [μm] | [μm] | [μm] | [μm] | [μm] | [μm] | [μm] | [μm] | | [μm] |
| Example A1 | LA | 0.08 | 0.08 | 0.03 | 0.03 | 0.03 | 0.03 | 0.03 | 0.11 | 1.00 | 0.05 |
| Example A2 | LA | 0.08 | 0.16 | 0.03 | 0.04 | 0.04 | 0.04 | 0.04 | 0.11 | 2.00 | 0.05 |
| Example A3 | LA | 0.08 | 0.32 | 0.04 | 0.05 | 0.05 | 0.05 | 0.05 | 0.12 | 4.00 | 0.04 |
| Example A4 | LA | 0.08 | 0.56 | 0.05 | 0.06 | 0.06 | 0.06 | 0.06 | 0.13 | 7.00 | 0.03 |
| Example A5 | LA | 0.08 | 0.80 | 0.06 | 0.07 | 0.07 | 0.08 | 0.08 | 0.14 | 10.00 | 0.02 |
| Example A6 | LA | 0.12 | 0.12 | 0.03 | 0.06 | 0.06 | 0.06 | 0.06 | 0.15 | 1.00 | 0.09 |
| Example A7 | LA | 0.12 | 0.24 | 0.04 | 0.07 | 0.07 | 0.07 | 0.07 | 0.16 | 2.00 | 0.08 |
| Example A8 | LA | 0.12 | 0.48 | 0.05 | 0.08 | 0.08 | 0.08 | 0.08 | 0.17 | 4.00 | 0.07 |
| Example A9 | LA | 0.12 | 0.84 | 0.06 | 0.09 | 0.09 | 0.10 | 0.10 | 0.18 | 7.00 | 0.06 |
| Example A10 | LA | 0.12 | 1.20 | 0.07 | 0.10 | 0.11 | 0.12 | 0.12 | 0.19 | 10.00 | 0.05 |
| Example A11 | LA | 0.16 | 0.16 | 0.04 | 0.12 | 0.12 | 0.12 | 0.12 | 0.20 | 1.00 | 0.12 |
| Example A12 | LA | 0.16 | 0.32 | 0.05 | 0.16 | 0.16 | 0.16 | 0.16 | 0.21 | 2.00 | 0.11 |
| Example A13 | LA | 0.16 | 0.64 | 0.07 | 0.19 | 0.19 | 0.20 | 0.20 | 0.23 | 4.00 | 0.09 |
| Example A14 | LA | 0.16 | 1.28 | 0.10 | 0.23 | 0.24 | 0.25 | 0.25 | 0.26 | 8.00 | 0.06 |
| Example A15 | LA | 0.20 | 0.20 | 0.05 | 0.17 | 0.17 | 0.17 | 0.17 | 0.25 | 1.00 | 0.15 |
| Example A16 | LA | 0.20 | 0.40 | 0.06 | 0.19 | 0.19 | 0.19 | 0.19 | 0.26 | 2.00 | 0.14 |
| Example A17 | LA | 0.20 | 0.60 | 0.07 | 0.21 | 0.21 | 0.22 | 0.23 | 0.27 | 3.00 | 0.13 |
| Example A18 | LA | 0.20 | 0.80 | 0.09 | 0.23 | 0.23 | 0.24 | 0.24 | 0.29 | 4.00 | 0.11 |
| Example A19 | LA | 0.20 | 1.40 | 0.11 | 0.26 | 0.27 | 0.28 | 0.29 | 0.31 | 7.00 | 0.09 |

Table 2

| | Cylinder liner material | Surface roughness | | | | | | | Characteristic values | | |
|---|---|---|---|---|---|---|---|---|---|---|---|
| | | Rk | Rvk | Rpk | Ra (CHA3) | Ra (CHA30) | Ra(CHA50) | Ra(CHA60) | Rk+Rpk | Rvk/Rk | Rk-Rpk |
| | | [μm] | [μm] | [μm] | [μm] | [μm] | [μm] | [μm] | [μm] | | [μm] |
| Example A20 | LA | 0.25 | 0.25 | 0.06 | 0.20 | 0.20 | 0.20 | 0.20 | 0.31 | 1.00 | 0.19 |
| Example A22 | LA | 0.25 | 0.50 | 0.08 | 0.22 | 0.23 | 0.23 | 0.23 | 0.33 | 2.00 | 0.17 |
| Example A21 | LA | 0.25 | 0.75 | 0.09 | 0.25 | 0.26 | 0.26 | 0.27 | 0.34 | 3.00 | 0.16 |
| Example A23 | LA | 0.25 | 1.00 | 0.12 | 0.28 | 0.28 | 0.29 | 0.29 | 0.37 | 4.00 | 0.13 |
| Example A24 | LA | 0.25 | 1.50 | 0.13 | 0.29 | 0.31 | 0.32 | 0.33 | 0.38 | 6.00 | 0.12 |
| Example A25 | LA | 0.30 | 0.30 | 0.07 | 0.30 | 0.31 | 0.31 | 0.31 | 0.37 | 1.00 | 0.23 |
| Example A26 | LA | 0.30 | 0.60 | 0.09 | 0.31 | 0.32 | 0.33 | 0.33 | 0.39 | 2.00 | 0.21 |
| Example A27 | LA | 0.30 | 0.90 | 0.11 | 0.33 | 0.33 | 0.34 | 0.34 | 0.41 | 3.00 | 0.19 |
| Example A28 | LA | 0.30 | 1.20 | 0.13 | 0.34 | 0.35 | 0.37 | 0.38 | 0.43 | 4.00 | 0.17 |
| Example A29 | LA | 0.30 | 1.80 | 0.15 | 0.36 | 0.38 | 0.41 | 0.42 | 0.45 | 6.00 | 0.15 |
| Example A30 | LA | 0.30 | 1.80 | 0.20 | 0.38 | 0.41 | 0.45 | 0.47 | 0.50 | 6.00 | 0.10 |
| Example A31 | LA | 0.30 | 1.80 | 0.25 | 0.40 | 0.43 | 0.50 | 0.52 | 0.55 | 6.00 | 0.05 |
| Comparative Example A1 | LA | 0.33 | 1.98 | 0.25 | 0.42 | 0.45 | 0.52 | 0.57 | 0.58 | 6.00 | 0.08 |
| Comparative Example A2 | LA | 0.30 | 1.80 | 0.30 | 0.54 | 0.54 | 0.54 | 0.55 | 0.60 | 6.00 | 0.00 |
| Comparative Example A3 | LA | 0.08 | 0.06 | 0.03 | 0.03 | 0.03 | 0.03 | 0.03 | 0.11 | 0.80 | 0.05 |
| Comparative Example A4 | LA | 0.06 | 0.06 | 0.03 | 0.03 | 0.03 | 0.03 | 0.03 | 0.09 | 1.00 | 0.03 |
| Comparative Example A5 | LA | 0.40 | 0.22 | 0.25 | 0.48 | 0.52 | 0.55 | 0.56 | 0.65 | 0.55 | 0.15 |

EP 3 657 000 B2

Table 3

| | Cylinder liner material | Surface roughness | | | | | | | Characteristic values | | |
|---|---|---|---|---|---|---|---|---|---|---|---|
| | | Rk | Rvk | Rpk | Ra (CHA3) | Ra(CHA30) | Ra (CHA50) | Ra(CHA60) | Rk+Rpk | Rvk/Rk | Rk-Rpk |
| | | [μm] | [μm] | [μm] | [μm] | [μm] | [μm] | [μm] | [μm] | | [μm] |
| Example B1 | LB | 0.08 | 0.08 | 0.03 | 0.03 | 0.03 | 0.03 | 0.03 | 0.11 | 1.00 | 0.05 |
| Example B2 | LB | 0.08 | 0.16 | 0.03 | 0.04 | 0.04 | 0.04 | 0.04 | 0.11 | 2.00 | 0.05 |
| Example B3 | LB | 0.08 | 0.32 | 0.04 | 0.05 | 0.05 | 0.05 | 0.05 | 0.12 | 4.00 | 0.04 |
| Example B4 | LB | 0.08 | 0.56 | 0.05 | 0.06 | 0.06 | 0.06 | 0.06 | 0.13 | 7.00 | 0.03 |
| Example B5 | LB | 0.08 | 0.80 | 0.06 | 0.07 | 0.07 | 0.08 | 0.08 | 0.14 | 10.00 | 0.02 |
| Example B6 | LB | 0.12 | 0.12 | 0.03 | 0.06 | 0.06 | 0.06 | 0.06 | 0.15 | 1.00 | 0.09 |
| Example B7 | LB | 0.12 | 0.24 | 0.04 | 0.07 | 0.07 | 0.07 | 0.07 | 0.16 | 2.00 | 0.08 |
| Example B8 | LB | 0.12 | 0.48 | 0.05 | 0.08 | 0.08 | 0.08 | 0.08 | 0.17 | 4.00 | 0.07 |
| Example B9 | LB | 0.12 | 0.84 | 0.06 | 0.09 | 0.09 | 0.10 | 0.10 | 0.18 | 7.00 | 0.06 |
| Example B10 | LB | 0.12 | 1.20 | 0.07 | 0.10 | 0.11 | 0.12 | 0.12 | 0.19 | 10.00 | 0.05 |
| Example B11 | LB | 0.16 | 0.16 | 0.04 | 0.12 | 0.12 | 0.12 | 0.12 | 0.20 | 1.00 | 0.12 |
| Example B12 | LB | 0.16 | 0.32 | 0.05 | 0.16 | 0.16 | 0.16 | 0.16 | 0.21 | 2.00 | 0.11 |
| Example B13 | LB | 0.16 | 0.64 | 0.07 | 0.19 | 0.19 | 0.20 | 0.20 | 0.23 | 4.00 | 0.09 |
| Example B14 | LB | 0.16 | 1.28 | 0.10 | 0.23 | 0.24 | 0.25 | 0.25 | 0.26 | 8.00 | 0.06 |
| Example B15 | LB | 0.20 | 0.20 | 0.05 | 0.17 | 0.17 | 0.17 | 0.17 | 0.25 | 1.00 | 0.15 |
| Example B16 | LB | 0.20 | 0.40 | 0.06 | 0.19 | 0.19 | 0.19 | 0.19 | 0.26 | 2.00 | 0.14 |
| Example B17 | LB | 0.20 | 0.60 | 0.07 | 0.21 | 0.21 | 0.22 | 0.23 | 0.27 | 3.00 | 0.13 |
| Example B18 | LB | 0.20 | 0.80 | 0.09 | 0.23 | 0.23 | 0.24 | 0.24 | 0.29 | 4.00 | 0.11 |
| Example B19 | LB | 0.20 | 1.40 | 0.11 | 0.26 | 0.27 | 0.28 | 0.29 | 0.31 | 7.00 | 0.09 |

Table 4

| | Cylinder liner material | Surface roughness | | | | | | | Characteristic values | | |
|---|---|---|---|---|---|---|---|---|---|---|---|
| | | Rk | Rvk | Rpk | Ra (CHA3) | Ra(CHA30) | Ra(CHA50) | Ra(CHA60) | Rk+Rpk | Rvk/Rk | Rk-Rpk |
| | | [μm] | [μm] | [μm] | [μm] | [μm] | [μm] | [μm] | [μm] | | [μm] |
| Example B20 | LB | 0.25 | 0.25 | 0.06 | 0.20 | 0.20 | 0.20 | 0.20 | 0.31 | 1.00 | 0.19 |
| Example B22 | LB | 0.25 | 0.50 | 0.08 | 0.22 | 0.23 | 0.23 | 0.23 | 0.33 | 2.00 | 0.17 |
| Example B21 | LB | 0.25 | 0.75 | 0.09 | 0.24 | 0.25 | 0.25 | 0.27 | 0.34 | 3.00 | 0.16 |
| Example B23 | LB | 0.25 | 1.00 | 0.12 | 0.26 | 0.27 | 0.28 | 0.29 | 0.37 | 4.00 | 0.13 |
| Example B24 | LB | 0.25 | 1.50 | 0.13 | 0.29 | 0.30 | 0.31 | 0.32 | 0.38 | 6.00 | 0.12 |
| Example B25 | LB | 0.30 | 0.30 | 0.07 | 0.29 | 0.30 | 0.30 | 0.31 | 0.37 | 1.00 | 0.23 |
| Example B26 | LB | 0.30 | 0.60 | 0.09 | 0.30 | 0.31 | 0.31 | 0.33 | 0.39 | 2.00 | 0.21 |
| Example B27 | LB | 0.30 | 0.90 | 0.11 | 0.31 | 0.32 | 0.33 | 0.34 | 0.41 | 3.00 | 0.19 |
| Example B28 | LB | 0.30 | 1.20 | 0.13 | 0.32 | 0.34 | 0.36 | 0.38 | 0.43 | 4.00 | 0.17 |
| Example B29 | LB | 0.30 | 1.80 | 0.15 | 0.34 | 0.37 | 0.39 | 0.41 | 0.45 | 6.00 | 0.15 |
| Example B30 | LB | 0.30 | 1.80 | 0.20 | 0.36 | 0.39 | 0.41 | 0.43 | 0.50 | 6.00 | 0.10 |
| Example B31 | LB | 0.30 | 1.80 | 0.25 | 0.38 | 0.41 | 0.43 | 0.45 | 0.55 | 6.00 | 0.05 |
| Comparative Example B1 | LB | 0.33 | 1.98 | 0.25 | 0.40 | 0.43 | 0.50 | 0.55 | 0.58 | 6.00 | 0.08 |
| Comparative Example B2 | LB | 0.30 | 1.80 | 0.30 | 0.51 | 0.52 | 0.52 | 0.54 | 0.60 | 6.00 | 0.00 |
| Comparative Example B3 | LB | 0.08 | 0.06 | 0.03 | 0.03 | 0.03 | 0.03 | 0.03 | 0.11 | 0.80 | 0.05 |
| Comparative Example B4 | LB | 0.06 | 0.06 | 0.03 | 0.03 | 0.03 | 0.03 | 0.03 | 0.09 | 1.00 | 0.03 |
| Comparative Example B5 | LB | 0.40 | 0.22 | 0.25 | 0.48 | 0.52 | 0.55 | 0.56 | 0.65 | 0.55 | 0.15 |

Table 5

| | Friction coefficient A | | | | | Friction coefficient B | | | | | Friction coefficient A evaluation | Friction coefficient B evaluation |
| | Upper test piece coating film | Cross-hatch angle (CHA) | | | | Upper test piece coating film | Cross-hatch angle (CHA) | | | | | |
| | | 3 degrees | 30 degrees | 50 degrees | 60 degrees | | 3 degrees | 30 degrees | 50 degrees | 60 degrees | | |
|---|---|---|---|---|---|---|---|---|---|---|---|---|
| Example A1 | RA | 0.075 | 0.077 | 0.081 | 0.082 | RB | 0.065 | 0.067 | 0.070 | 0.071 | A | A |
| Example A2 | RA | 0.075 | 0.077 | 0.081 | 0.082 | RB | 0.065 | 0.067 | 0.070 | 0.071 | A | A |
| Example A3 | RA | 0.076 | 0.078 | 0.082 | 0.083 | RB | 0.066 | 0.068 | 0.071 | 0.072 | A | A |
| Example A4 | RA | 0.077 | 0.079 | 0.083 | 0.084 | RB | 0.067 | 0.069 | 0.072 | 0.073 | A | A |
| Example A5 | RA | 0.077 | 0.078 | 0.083 | 0.083 | RB | 0.067 | 0.068 | 0.072 | 0.073 | A | A |
| Example A6 | RA | 0.078 | 0.081 | 0.084 | 0.084 | RB | 0.068 | 0.070 | 0.073 | 0.073 | A | A |
| Example A7 | RA | 0.078 | 0.081 | 0.085 | 0.085 | RB | 0.068 | 0.070 | 0.074 | 0.075 | A | A |
| Example A8 | RA | 0.080 | 0.083 | 0.087 | 0.088 | RB | 0.070 | 0.072 | 0.076 | 0.077 | A | A |
| Example A9 | RA | 0.081 | 0.084 | 0.088 | 0.090 | RB | 0.070 | 0.073 | 0.077 | 0.078 | A | A |
| Example A10 | RA | 0.081 | 0.084 | 0.087 | 0.090 | RB | 0.070 | 0.073 | 0.076 | 0.078 | A | A |
| Example A11 | RA | 0.082 | 0.085 | 0.089 | 0.091 | RB | 0.071 | 0.074 | 0.077 | 0.079 | A | A |
| Example A12 | RA | 0.082 | 0.086 | 0.091 | 0.093 | RB | 0.071 | 0.075 | 0.079 | 0.081 | B | A |
| Example A13 | RA | 0.084 | 0.087 | 0.092 | 0.093 | RB | 0.073 | 0.076 | 0.080 | 0.081 | B | A |
| Example A14 | RA | 0.085 | 0.088 | 0.092 | 0.093 | RB | 0.074 | 0.077 | 0.080 | 0.082 | B | A |
| Example A15 | RA | 0.085 | 0.088 | 0.093 | 0.095 | RB | 0.074 | 0.077 | 0.081 | 0.083 | B | A |
| Example A16 | RA | 0.086 | 0.091 | 0.096 | 0.099 | RB | 0.075 | 0.079 | 0.084 | 0.086 | B | A |
| Example A17 | RA | 0.087 | 0.092 | 0.097 | 0.100 | RB | 0.076 | 0.080 | 0.084 | 0.087 | B | A |
| Example A18 | RA | 0.087 | 0.093 | 0.098 | 0.101 | RB | 0.076 | 0.081 | 0.085 | 0.089 | B | A |
| Example A19 | RA | 0.088 | 0.093 | 0.098 | 0.101 | RB | 0.077 | 0.081 | 0.085 | 0.090 | B | A |

EP 3 657 000 B2

Table 6

| | Friction coefficient A | | | | | Friction coefficient B | | | | | Friction coefficient A evaluation | Friction coefficient B evaluation |
| | Upper test piece coating film | Cross-hatch angle (CHA) | | | | Upper test piece coating film | Cross-hatch angle (CHA) | | | | | |
| | | 3 degrees | 30 degrees | 50 degrees | 60 degrees | | 3 degrees | 30 degrees | 50 degrees | 60 degrees | | |
|---|---|---|---|---|---|---|---|---|---|---|---|---|
| Example A20 | RA | 0.088 | 0.092 | 0.098 | 0.100 | RB | 0.077 | 0.080 | 0.085 | 0.087 | B | A |
| Example A22 | RA | 0.089 | 0.093 | 0.100 | 0.101 | RB | 0.077 | 0.081 | 0.087 | 0.089 | B | A |
| Example A21 | RA | 0.090 | 0.093 | 0.101 | 0.102 | RB | 0.078 | 0.081 | 0.088 | 0.089 | C | A |
| Example A23 | RA | 0.091 | 0.095 | 0.101 | 0.103 | RB | 0.079 | 0.083 | 0.088 | 0.090 | C | A |
| Example A24 | RA | 0.092 | 0.096 | 0.101 | 0.103 | RB | 0.080 | 0.084 | 0.088 | 0.090 | C | A |
| Example A25 | RA | 0.090 | 0.094 | 0.101 | 0.102 | RB | 0.078 | 0.082 | 0.088 | 0.090 | C | A |
| Example A26 | RA | 0.094 | 0.098 | 0.103 | 0.105 | RB | 0.082 | 0.085 | 0.090 | 0.091 | C | A |
| Example A27 | RA | 0.094 | 0.099 | 0.104 | 0.106 | RB | 0.082 | 0.086 | 0.090 | 0.092 | C | A |
| Example A28 | RA | 0.095 | 0.099 | 0.104 | 0.106 | RB | 0.083 | 0.086 | 0.090 | 0.092 | C | A |
| Example A29 | RA | 0.096 | 0.099 | 0.107 | 0.109 | RB | 0.084 | 0.086 | 0.093 | 0.094 | C | B |
| Example A30 | RA | 0.096 | 0.100 | 0.108 | 0.110 | RB | 0.084 | 0.087 | 0.094 | 0.095 | C | B |
| Example A31 | RA | 0.097 | 0.101 | 0.110 | 0.115 | RB | 0.084 | 0.088 | 0.096 | 0.097 | C | B |
| Comparative Example A1 | RA | 0.101 | 0.107 | 0.114 | 0.117 | RB | 0.088 | 0.093 | 0.099 | 0.101 | D | B |
| Comparative Example A2 | RA | 0.104 | 0.111 | 0.118 | 0.121 | RB | 0.090 | 0.097 | 0.103 | 0.105 | D | C |
| Comparative Example A3 | RA | 0.074 | 0.076 | 0.080 | 0.081 | RB | 0.064 | 0.066 | 0.070 | 0.071 | A | A |
| Comparative Example A4 | RA | 0.073 | 0.075 | 0.079 | 0.080 | RB | 0.064 | 0.065 | 0.069 | 0.071 | A | A |
| Comparative Example A5 | RA | 0.111 | 0.118 | 0.126 | 0.131 | Not measured | | | | | D | - |

Table 7

| | Friction coefficient A | | | | | Friction coefficient B | | | | | Friction coefficient A evaluation | Friction coefficient B evaluation |
|---|---|---|---|---|---|---|---|---|---|---|---|---|
| | Upper test piece coating film | Cross-hatch angle (CHA) | | | | Upper test piece coating film | Cross-hatch angle (CHA) | | | | | |
| | | 3 degrees | 30 degrees | 50 degrees | 60 degrees | | 3 degrees | 30 degrees | 50 degrees | 60 degrees | | |
| Example B1 | RA | 0.070 | 0.072 | 0.075 | 0.076 | RB | 0.059 | 0.060 | 0.063 | 0.064 | A | A |
| Example B2 | RA | 0.070 | 0.072 | 0.075 | 0.076 | RB | 0.059 | 0.060 | 0.063 | 0.064 | A | A |
| Example B3 | RA | 0.071 | 0.073 | 0.076 | 0.077 | RB | 0.059 | 0.061 | 0.064 | 0.064 | A | A |
| Example B4 | RA | 0.072 | 0.073 | 0.077 | 0.078 | RB | 0.060 | 0.062 | 0.065 | 0.066 | A | A |
| Example B5 | RA | 0.072 | 0.073 | 0.077 | 0.078 | RB | 0.060 | 0.061 | 0.065 | 0.065 | A | A |
| Example B6 | RA | 0.073 | 0.075 | 0.078 | 0.079 | RB | 0.061 | 0.063 | 0.066 | 0.067 | A | A |
| Example B7 | RA | 0.073 | 0.075 | 0.079 | 0.080 | RB | 0.061 | 0.063 | 0.066 | 0.067 | A | A |
| Example B8 | RA | 0.074 | 0.077 | 0.081 | 0.083 | RB | 0.062 | 0.065 | 0.068 | 0.069 | A | A |
| Example B9 | RA | 0.075 | 0.078 | 0.082 | 0.083 | RB | 0.063 | 0.066 | 0.069 | 0.070 | A | A |
| Example B10 | RA | 0.075 | 0.078 | 0.081 | 0.083 | RB | 0.063 | 0.066 | 0.068 | 0.070 | A | A |
| Example B11 | RA | 0.076 | 0.079 | 0.083 | 0.085 | RB | 0.064 | 0.066 | 0.069 | 0.071 | A | A |
| Example B12 | RA | 0.076 | 0.080 | 0.085 | 0.086 | RB | 0.064 | 0.067 | 0.071 | 0.072 | A | A |
| Example B13 | RA | 0.078 | 0.081 | 0.086 | 0.087 | RB | 0.066 | 0.068 | 0.072 | 0.072 | A | A |
| Example B14 | RA | 0.079 | 0.082 | 0.086 | 0.088 | RB | 0.066 | 0.069 | 0.072 | 0.073 | A | A |
| Example B15 | RA | 0.079 | 0.082 | 0.086 | 0.087 | RB | 0.066 | 0.069 | 0.073 | 0.074 | A | A |
| Example B16 | RA | 0.080 | 0.085 | 0.089 | 0.090 | RB | 0.067 | 0.071 | 0.075 | 0.076 | A | A |
| Example B17 | RA | 0.081 | 0.086 | 0.090 | 0.091 | RB | 0.068 | 0.072 | 0.076 | 0.077 | A | A |
| Example B18 | RA | 0.081 | 0.086 | 0.091 | 0.093 | RB | 0.068 | 0.073 | 0.076 | 0.078 | B | A |
| Example B19 | RA | 0.082 | 0.086 | 0.091 | 0.093 | RB | 0.069 | 0.073 | 0.076 | 0.078 | B | A |

Table 8

| | Friction coefficient A | | | | | Friction coefficient B | | | | | Friction coefficient A evaluation | Friction coefficient B evaluation |
|---|---|---|---|---|---|---|---|---|---|---|---|---|
| | Upper test piece coating film | Cross-hatch angle (CHA) | | | | Upper test piece coating film | Cross-hatch angle (CHA) | | | | | |
| | | 3 degrees | 30 degrees | 50 degrees | 60 degrees | | 3 degrees | 30 degrees | 50 degrees | 60 degrees | | |
| Example B20 | RA | 0.082 | 0.086 | 0.091 | 0.092 | RB | 0.069 | 0.072 | 0.076 | 0.077 | B | A |
| Example B22 | RA | 0.083 | 0.086 | 0.093 | 0.093 | RB | 0.069 | 0.073 | 0.078 | 0.079 | B | A |
| Example B21 | RA | 0.084 | 0.086 | 0.094 | 0.094 | RB | 0.070 | 0.073 | 0.079 | 0.079 | B | A |
| Example B23 | RA | 0.085 | 0.088 | 0.094 | 0.095 | RB | 0.071 | 0.074 | 0.079 | 0.080 | B | A |
| Example B24 | RA | 0.086 | 0.089 | 0.094 | 0.095 | RB | 0.072 | 0.075 | 0.079 | 0.081 | B | A |
| Example B25 | RA | 0.084 | 0.087 | 0.094 | 0.095 | RB | 0.070 | 0.073 | 0.079 | 0.080 | B | A |
| Example B26 | RA | 0.087 | 0.091 | 0.096 | 0.097 | RB | 0.073 | 0.076 | 0.080 | 0.081 | B | A |
| Example B27 | RA | 0.087 | 0.092 | 0.097 | 0.098 | RB | 0.073 | 0.077 | 0.081 | 0.082 | B | A |
| Example B28 | RA | 0.088 | 0.092 | 0.097 | 0.098 | RB | 0.074 | 0.077 | 0.081 | 0.082 | B | A |
| Example B29 | RA | 0.089 | 0.092 | 0.100 | 0.101 | RB | 0.075 | 0.077 | 0.083 | 0.084 | B | A |
| Example B30 | RA | 0.089 | 0.093 | 0.100 | 0.101 | RB | 0.075 | 0.078 | 0.084 | 0.086 | B | A |
| Example B31 | RA | 0.090 | 0.094 | 0.102 | 0.104 | RB | 0.076 | 0.079 | 0.086 | 0.087 | C | A |
| Comparative Example B1 | RA | 0.094 | 0.100 | 0.106 | 0.107 | RB | 0.079 | 0.083 | 0.089 | 0.090 | C | A |
| Comparative Example B2 | RA | 0.097 | 0.103 | 0.110 | 0.110 | RB | 0.081 | 0.087 | 0.092 | 0.094 | C | B |
| Comparative Example B3 | RA | 0.069 | 0.071 | 0.074 | 0.075 | RB | 0.058 | 0.059 | 0.062 | 0.064 | A | A |
| Comparative Example B4 | RA | 0.068 | 0.070 | 0.073 | 0.074 | RB | 0.057 | 0.059 | 0.062 | 0.064 | A | A |
| Comparative Example B5 | RA | 0.103 | 0.110 | 0.117 | 0.119 | Not measured | | | | | D | - |

EP 3 657 000 B2

Table 9

| | Seizing resistance | | | | | Seizing resistance evaluation |
| --- | --- | --- | --- | --- | --- | --- |
| | Upper test piece coating film | Cross-hatch angle (CHA) | | | | |
| | | 3 degrees | 30 degrees | 50 degrees | 60 degrees | |
| Example A1 | RC | 85 | 92 | No scuffing | No scuffing | C |
| Example A2 | RC | 88 | 95 | No scuffing | No scuffing | C |
| Example A3 | RC | 90 | 97 | No scuffing | No scuffing | B |
| Example A4 | RC | 92 | No scuffing | No scuffing | No scuffing | B |
| Example A5 | RC | 96 | No scuffing | No scuffing | No scuffing | B |
| Example A6 | RC | 86 | 93 | No scuffing | No scuffing | C |
| Example A7 | RC | 88 | 98 | No scuffing | No scuffing | C |
| Example A8 | RC | 90 | 98 | No scuffing | No scuffing | B |
| Example A9 | RC | 94 | No scuffing | No scuffing | No scuffing | B |
| Example A10 | RC | No scuffing | No scuffing | No scuffing | No scuffing | A |
| Example A11 | RC | 87 | 94 | No scuffing | No scuffing | C |
| Example A12 | RC | 89 | No scuffing | No scuffing | No scuffing | C |
| Example A13 | RC | 96 | No scuffing | No scuffing | No scuffing | B |
| Example A14 | RC | No scuffing | No scuffing | No scuffing | No scuffing | A |
| Example A15 | RC | 88 | 95 | No scuffing | No scuffing | C |
| Example A16 | RC | 90 | No scuffing | No scuffing | No scuffing | B |
| Example A17 | RC | 93 | No scuffing | No scuffing | No scuffing | B |
| Example A18 | RC | 95 | No scuffing | No scuffing | No scuffing | B |
| Example A19 | RC | No scuffing | No scuffing | No scuffing | No scuffing | A |

Table 10

| | Seizing resistance | | | | | Seizing resistance evaluation |
| --- | --- | --- | --- | --- | --- | --- |
| | Upper test piece coating film | Cross-hatch angle (CHA) | | | | |
| | | 3 degrees | 30 degrees | 50 degrees | 60 degrees | |
| Example A20 | RC | 88 | 97 | No scuffing | No scuffing | C |
| Example A22 | RC | 90 | No scuffing | No scuffing | No scuffing | B |
| Example A21 | RC | 92 | No scuffing | No scuffing | No scuffing | B |
| Example A23 | RC | 93 | No scuffing | No scuffing | No scuffing | B |
| Example A24 | RC | No scuffing | No scuffing | No scuffing | No scuffing | A |
| Example A25 | RC | 88 | 98 | No scuffing | No scuffing | C |
| Example A26 | RC | 90 | No scuffing | No scuffing | No scuffing | B |
| Example A27 | RC | 93 | No scuffing | No scuffing | No scuffing | B |
| Example A28 | RC | 95 | No scuffing | No scuffing | No scuffing | B |
| Example A29 | RC | No scuffing | No scuffing | No scuffing | No scuffing | A |
| Example A30 | RC | 97 | No scuffing | No scuffing | No scuffing | B |
| Example A31 | RC | 95 | No scuffing | No scuffing | No scuffing | B |

(continued)

| | Seizing resistance | | | | | Seizing resistance evaluation |
| | Upper test piece coating film | Cross-hatch angle (CHA) | | | | |
| | | 3 degrees | 30 degrees | 50 degrees | 60 degrees | |
|---|---|---|---|---|---|---|
| Comparative Example A1 | RC | 96 | No scuffing | No scuffing | No scuffing | B |
| Comparative Example A2 | RC | 94 | No scuffing | No scuffing | No scuffing | B |
| Comparative Example A3 | RC | 75 | 85 | 91 | 95 | D |
| Comparative Example A4 | RC | 80 | 89 | 94 | 97 | D |
| Comparative Example A5 | RC | 84 | 92 | 100 | 102 | D |

Table 11

| | Seizing resistance | | | | | Seizing resistance evaluation |
| | Upper test piece coating film | Cross-hatch angle (CHA) | | | | |
| | | 3 degrees | 30 degrees | 50 degrees | 60 degrees | |
|---|---|---|---|---|---|---|
| Example B1 | RC | 91 | 99 | No scuffing | No scuffing | B |
| Example B2 | RC | 94 | No scuffing | No scuffing | No scuffing | B |
| Example B3 | RC | No scuffing | No scuffing | No scuffing | No scuffing | A |
| Example B4 | RC | No scuffing | No scuffing | No scuffing | No scuffing | A |
| Example B5 | RC | No scuffing | No scuffing | No scuffing | No scuffing | A |
| Example B6 | RC | 93 | No scuffing | No scuffing | No scuffing | B |
| Example B7 | RC | 95 | No scuffing | No scuffing | No scuffing | B |
| Example B8 | RC | 98 | No scuffing | No scuffing | No scuffing | B |
| Example B9 | RC | No scuffing | No scuffing | No scuffing | No scuffing | A |
| Example B10 | RC | No scuffing | No scuffing | No scuffing | No scuffing | A |
| Example B11 | RC | 95 | No scuffing | No scuffing | No scuffing | B |
| Example B12 | RC | 98 | No scuffing | No scuffing | No scuffing | B |
| Example B13 | RC | No scuffing | No scuffing | No scuffing | No scuffing | A |
| Example B14 | RC | No scuffing | No scuffing | No scuffing | No scuffing | A |
| Example B15 | RC | 95 | No scuffing | No scuffing | No scuffing | B |
| Example B16 | RC | 98 | No scuffing | No scuffing | No scuffing | B |
| Example B17 | RC | No scuffing | No scuffing | No scuffing | No scuffing | A |
| Example B18 | RC | No scuffing | No scuffing | No scuffing | No scuffing | A |
| Example B19 | RC | No scuffing | No scuffing | No scuffing | No scuffing | A |

Table 12

| | Seizing resistance | | | | | Seizing resistance evaluation |
| | Upper test piece coating film | Cross-hatch angle (CHA) | | | | |
| | | 3 degrees | 30 degrees | 50 degrees | 60 degrees | |
|---|---|---|---|---|---|---|
| Example B20 | RC | 97 | No scuffing | No scuffing | No scuffing | B |

(continued)

| | Seizing resistance | | | | | Seizing resistance evaluation |
|---|---|---|---|---|---|---|
| | Upper test piece coating film | Cross-hatch angle (CHA) | | | | |
| | | 3 degrees | 30 degrees | 50 degrees | 60 degrees | |
| Example B22 | RC | No scuffing | No scuffing | No scuffing | No scuffing | A |
| Example B21 | RC | No scuffing | No scuffing | No scuffing | No scuffing | A |
| Example B23 | RC | No scuffing | No scuffing | No scuffing | No scuffing | A |
| Example B24 | RC | No scuffing | No scuffing | No scuffing | No scuffing | A |
| Example B25 | RC | No scuffing | No scuffing | No scuffing | No scuffing | A |
| Example B26 | RC | No scuffing | No scuffing | No scuffing | No scuffing | A |
| Example B27 | RC | No scuffing | No scuffing | No scuffing | No scuffing | A |
| Example B28 | RC | No scuffing | No scuffing | No scuffing | No scuffing | A |
| Example B29 | RC | No scuffing | No scuffing | No scuffing | No scuffing | A |
| Example B30 | RC | No scuffing | No scuffing | No scuffing | No scuffing | A |
| Example B31 | RC | No scuffing | No scuffing | No scuffing | No scuffing | A |
| Comparative Example B1 | RC | No scuffing | No scuffing | No scuffing | No scuffing | A |
| Comparative Example B2 | RC | No scuffing | No scuffing | No scuffing | No scuffing | A |
| Comparative Example B3 | RC | 92 | No scuffing | No scuffing | No scuffing | B |
| Comparative Example B4 | RC | 98 | No scuffing | No scuffing | No scuffing | B |
| Comparative Example B5 | RC | No scuffing | No scuffing | No scuffing | No scuffing | A |

Table 13

| | Cylinder liner material | Friction coefficient* | |
|---|---|---|---|
| | | Upper test piece coating film: RB | Upper test piece coating film: RA |
| Example B13 (CHA30) | LB | 0.068 (78) | 0.081 (93) |
| Example A13 (CHA30) | LA | 0.076 (87) | 0.087 (100) |
| Values in parentheses are relative values while friction coefficient (0.087) in lower right field in table is reference value (100) | | | |

Table 14

| Group number | Experiment example no. | Cylinder liner material | Surface roughness | | | | | | Characteristic values | | |
|---|---|---|---|---|---|---|---|---|---|---|---|
| | | | Rk | Rvk | Rpk | Ra(CHA3) | Ra(CHA30) | Ra(CHA50) | Rk+Rpk | Rvk/Rk | Rk-Rpk |
| | | | [μm] | [μm] | [μm] | [μm] | [μm] | [μm] | [μm] | | [μm] |
| 1A | Example A22 | LA | 0.25 | 0.50 | 0.08 | 0.22 | 0.23 | 0.23 | 0.33 | 2.00 | 0.17 |
| | Example A21 | LA | 0.25 | 0.75 | 0.09 | 0.25 | 0.26 | 0.26 | 0.34 | 3.00 | 0.16 |
| | Comparative Example A6 | LA | 0.38 | 0.92 | 0.20 | 0.32 | 0.33 | 0.32 | 0.58 | 2.42 | 0.18 |
| | | | | | | | | | | | |
| 2A | Example A3 | LA | 0.08 | 0.32 | 0.04 | 0.05 | 0.05 | 0.05 | 0.12 | 4.00 | 0.04 |
| | Example A4 | LA | 0.08 | 0.56 | 0.05 | 0.06 | 0.06 | 0.06 | 0.13 | 7.00 | 0.03 |
| | Comparative Example A7 | LA | 0.06 | 0.30 | 0.03 | 0.04 | 0.04 | 0.04 | 0.09 | 5.00 | 0.03 |
| | | | | | | | | | | | |
| 1B | Example B22 | LB | 0.25 | 0.50 | 0.08 | 0.22 | 0.23 | 0.23 | 0.33 | 2.00 | 0.17 |
| | Example B21 | LB | 0.25 | 0.75 | 0.09 | 0.24 | 0.25 | 0.25 | 0.34 | 3.00 | 0.16 |
| | Comparative Example B6 | LB | 0.38 | 0.92 | 0.20 | 0.32 | 0.33 | 0.32 | 0.58 | 2.42 | 0.18 |
| | | | | | | | | | | | |
| 2B | Example B3 | LB | 0.08 | 0.32 | 0.04 | 0.05 | 0.05 | 0.05 | 0.12 | 4.00 | 0.04 |
| | Example B4 | LB | 0.08 | 0.56 | 0.05 | 0.06 | 0.06 | 0.06 | 0.13 | 7.00 | 0.03 |
| | Comparative Example B7 | LB | 0.06 | 0.30 | 0.03 | 0.04 | 0.04 | 0.04 | 0.09 | 5.00 | 0.03 |

Table 15

| Group number | Experiment example no. | Friction coefficient A | | | | Friction coefficient B | | | | Friction coefficient A evaluation | Friction coefficient B evaluation |
|---|---|---|---|---|---|---|---|---|---|---|---|
| | | Upper test piece coating film | Cross-hatch angle (CHA) | | | Upper test piece coating film | Cross-hatch angle (CHA) | | | | |
| | | | 3 degrees | 30 degrees | 50 degrees | | 3 degrees | 30 degrees | 50 degrees | | |
| 1A | Example A22 | RA | 0.089 | 0.093 | 0.100 | RB | 0.077 | 0.081 | 0.087 | B | A |
| | Example A21 | RA | 0.090 | 0.093 | 0.101 | RB | 0.078 | 0.081 | 0.088 | C | A |
| | Comparative Example A6 | RA | 0.102 | 0.108 | 0.115 | RB | 0.089 | 0.095 | 0.099 | D | B |
| 2A | Example A3 | RA | 0.076 | 0.078 | 0.082 | RB | 0.066 | 0.068 | 0.071 | A | A |
| | Example A4 | RA | 0.077 | 0.079 | 0.083 | RB | 0.067 | 0.069 | 0.072 | A | A |
| | Comparative Example A7 | RA | 0.070 | 0.072 | 0.074 | RB | 0.061 | 0.063 | 0.064 | A | A |
| 1B | Example B22 | RA | 0.083 | 0.086 | 0.093 | RB | 0.069 | 0.073 | 0.078 | B | A |
| | Example B21 | RA | 0.084 | 0.086 | 0.094 | RB | 0.070 | 0.073 | 0.079 | B | A |
| | Comparative Example B6 | RA | 0.095 | 0.100 | 0.107 | RB | 0.080 | 0.085 | 0.089 | C | A |
| 2B | Example B3 | RA | 0.071 | 0.073 | 0.076 | RB | 0.059 | 0.061 | 0.064 | A | A |
| | Example B4 | RA | 0.072 | 0.073 | 0.077 | RB | 0.060 | 0.062 | 0.065 | A | A |
| | Comparative Example B7 | RA | 0.065 | 0.067 | 0.069 | RB | 0.055 | 0.056 | 0.058 | A | A |

Table 16

| Group number | Experiment example no. | Seizing resistance | | | | Seizing resistance evaluation |
| | | Upper test piece coating film | Cross-hatch angle (CHA) | | | |
| | | | 3 degrees | 30 degrees | 50 degrees | |
| 1A | Example A22 | RC | 90 | No scuffing | No scuffing | B |
| | Example A21 | RC | 92 | No scuffing | No scuffing | B |
| | Comparative Example A6 | RC | 95 | No scuffing | No scuffing | B |
| | | | | | | |
| 2A | Example A3 | RC | 90 | 97 | No scuffing | B |
| | Example A4 | RC | 92 | No scuffing | No scuffing | B |
| | Comparative Example A7 | RC | 82 | 88 | 94 | D |
| | | | | | | |
| 1B | Example B22 | RC | No scuffing | No scuffing | No scuffing | A |
| | Example B21 | RC | No scuffing | No scuffing | No scuffing | A |
| | Comparative Example B6 | RC | No scuffing | No scuffing | No scuffing | A |
| | | | | | | |
| 2B | Example B3 | RC | No scuffing | No scuffing | No scuffing | A |
| | Example B4 | RC | No scuffing | No scuffing | No scuffing | A |
| | Comparative Example B7 | RC | 98 | No scuffing | No scuffing | B |

Reference Signs List

10, 10A, 10B: cylinder liner
12: inner peripheral sliding surface
14: precipitated graphite
20, 20A, 20B: machining mark
22: first parallel line group
24: second parallel line group
100: internal combustion engine
110: cylinder block
120: piston
130: piston ring
130A: top ring
130B: second ring
130C: oil ring
140: combustion chamber
200: reciprocating friction tester
210: upper test piece
220: lower test piece
230: holding base

**Claims**

1. A cast iron cylinder liner (10), comprising an inner peripheral sliding surface made of cast iron,

wherein the inner peripheral sliding surface includes a region satisfying Expression (1) to Expression (4),

wherein a machining mark constituted by a cross-hatch pattern including a first parallel straight line group (22) and a second parallel straight line group (24) crossing the first parallel line group is formed in the region satisfying Expression (1) to Expression (4),

wherein a cross-hatch angle formed by a direction in which the first parallel line group extends from one side to another side in a cylinder liner circumferential direction and a direction in which the second parallel line group extends from the one side to the another side in the cylinder liner circumferential direction is equal to or larger than 3 degrees and equal to or smaller than 50 degrees,

wherein the cast iron is the flake graphite cast iron,

wherein the hardness of the flake graphite cast iron based on JIS Z 2245:2011 is equal to or higher than 90 HRB and equal to or lower than 115 HRB,

.

$$\text{Expression (1)} \quad Rvk/Rk \geq 1.0$$

.

$$\text{Expression (2)} \quad 0.08 \ \mu m \leq Rk \leq 0.2 \ \mu m$$

.

$$\text{Expression (3)} \quad Rk - Rpk \geq 0.02 \ \mu m$$

.

$$\text{Expression (4)} \quad Rvk \leq 1.1 \ \mu m$$

[in Expression (1) to Expression (4), Rk is a core roughness depth based on JIS B0671-2:2002, Rpk is a reduced peak height based on JIS B0671-2:2002, and Rvk is a reduced valley depth based on JIS B0671-2:2002].

2. The cast iron cylinder liner according to claim 1, wherein Rvk/Rk of the region satisfying Expression (1) to Expression (4) is equal to or higher than 1.5.

3. The cast iron cylinder liner according to claim 1 or 2, wherein the core roughness depth Rk of the region satisfying Expression (1) to Expression (4) is equal to 0.2 $\mu$m, and Rvk/Rk of the region satisfying Expression (1) to Expression (4) is equal to or higher than 3.0.

4. The cast iron cylinder liner according to any one of claim 1 to 3, wherein an arithmetical average roughness Ra based on JIS B0601:2013 of the region is equal to or lower than 0.5 $\mu$m.

5. The cast iron cylinder liner according to any one of claim 1 to 4, wherein an entire surface of the inner peripheral sliding surface has the same surface property.

6. The cast iron cylinder liner according to any one of claim 1 to 5, wherein the reduced valley depth Rvk is equal to or lower than 1.0 $\mu$m.

7. The cast iron cylinder liner according to any of claim 1 to 4, wherein the cross-hatch angle is equal to or larger than 3 degrees and equal to or smaller than 38 degrees.

8. An internal combustion engine (100), comprising:

a cylinder bore including an inner peripheral sliding surface made of cast iron;

a piston (120) arranged on an inner peripheral side of the cylinder bore; and

a piston ring (130) mounted to a annular groove provided along a piston circumferential direction on an outer peripheral surface of the piston,

wherein the inner peripheral sliding surface includes a region satisfying Expression (1) to Expression (4),

wherein a machining mark constituted by a cross-hatch pattern including a first parallel straight line group (22) and a second parallel straight line group (24) crossing the first parallel line group is formed in the region satisfying Expression (1) to Expression (4),

wherein a cross-hatch angle formed by a direction in which the first parallel line group extends from one side to another side in a cylinder bore circumferential direction and a direction in which the second parallel line group extends from the one side to the another side in the cylinder bore circumferential direction is equal to or larger than 3 degrees and equal to or smaller than 50 degrees,

wherein the cast iron is the flake graphite cast iron,

wherein the hardness of the cast iron based on JIS Z 2245:2011 is equal to or higher than 90 HRB and equal to or lower than 115 HRB,

.

$$\text{Expression (1)} \quad Rvk/Rk \geq 1.0$$

.

$$\text{Expression (2)} \quad 0.08 \text{ µm} \leq Rk \leq 0.2 \text{ µm}$$

.

$$\text{Expression (3)} \quad Rk-Rpk \geq 0.02 \text{ µm}$$

.

$$\text{Expression (4)} \quad Rvk \leq 1.1 \text{ µm}$$

[in Expression (1) to Expression (4), Rk is a core roughness depth based on JIS B0671-2:2002, Rpk is a reduced peak height based on JIS B0671-2:2002, and Rvk is a reduced valley depth based on JIS B0671-2:2002.

9. The internal combustion engine according to claim 8, further comprising a cast iron cylinder liner including an inner peripheral sliding surface having a region satisfying Expression (1) to Expression (4).

10. The internal combustion engine according to claim 9, further comprising a cast iron cylinder block including the cylinder bore.

11. The internal combustion engine according to any one of claim 8 to 10, wherein an entire surface of the inner peripheral sliding surface has the same surface property.

12. The internal combustion engine according to any one of claim 8 to 11, wherein the reduced valley depth Rvk is equal to or lower than 1.0 µm.

13. The internal combustion engine according to any one of claim 8 to 12, wherein the cross-hatch angle is equal to or larger than 3 degrees and equal to or smaller than 38 degrees.

**Patentansprüche**

1. Zylinderlaufbuchse (10) aus Gusseisen, bestehend aus einer inneren, peripheren Gleitfläche aus Gusseisen,

wobei die innere, umlaufende Gleitfläche einen Bereich umfasst, der den Ausdruck (1) bis Ausdruck (4) erfüllt, wobei in dem Bereich, der den Ausdruck (1) bis Ausdruck (4) erfüllt, eine Bearbeitungsmarkierung in Form eines Kreuzschliffmusters ausgebildet ist, das eine erste Gruppe paralleler gerader Linien (22) und eine zweite Gruppe paralleler gerader Linien (24) umfasst, die die erste Gruppe paralleler Linien kreuzt, wobei der Kreuzwinkel, der durch die Richtung, in der sich die erste Gruppe paralleler Linien von einer Seite zur anderen Seite in Umfangsrichtung der Zylinderlaufbuchse erstreckt, und die Richtung, in der sich die zweite Gruppe paralleler Linien von der einen Seite zur anderen Seite in Umfangsrichtung der Zylinderlaufbuchse erstreckt, gebildet wird, größer oder gleich 3 Grad und kleiner oder gleich 50 Grad ist,
wobei es sich bei dem Gusseisen um Gusseisen mit Lamellengrafit handelt,
wobei die Härte des Gusseisens mit Lamellengrafit gemäß JIS Z 2245:2011 gleich oder höher als 90 HRB und gleich oder niedriger als 115 HRB ist,

- 

$$\text{Ausdruck (1)} \quad Rvk/Rk \geq 1,0$$

- 

$$\text{Ausdruck (2)} \quad 0,08 \ \mu m \leq Rk \leq 0,2 \ \mu m$$

- 

$$\text{Ausdruck (3)} \quad Rk-Rpk \geq 0,02 \ \mu m$$

- 

$$\text{Ausdruck (4)} \quad Rvk \leq 1,1 \ \mu m$$

[in Ausdruck (1) bis Ausdruck (4) gilt: Rk ist eine Kernrautiefe basierend auf JIS B0671-2:2002, Rpk ist eine reduzierte Spitzenhöhe basierend auf JIS B0671-2:2002 und Rvk ist eine reduzierte Riefentiefe basierend auf JIS B0671-2:2002].

2. Zylinderlaufbuchse aus Gusseisen gemäß Anspruch 1, wobei Rvk/Rk des Bereichs, der den Ausdruck (1) bis Ausdruck (4) erfüllt, größer oder gleich 1,5 ist.

3. Zylinderlaufbuchse aus Gusseisen gemäß Anspruch 1 oder 2, wobei die Kernrautiefe Rk des Bereichs, der den Ausdruck (1) bis Ausdruck (4) erfüllt, gleich 0, 2 $\mu$m beträgt und Rvk/Rk des Bereichs, der den Ausdruck (1) bis Ausdruck (4) erfüllt, gleich oder größer als 3,0 ist.

4. Zylinderlaufbuchse aus Gusseisen gemäß einem der Ansprüche 1 bis 3, wobei die arithmetische Durchschnittsrauheit Ra des Bereichs gemäß JIS B0601:2013 gleich oder niedriger als 0,5 $\mu$m ist.

5. Zylinderlaufbuchse aus Gusseisen gemäß einem der Ansprüche 1 bis 4, wobei die gesamte Oberfläche der inneren peripheren Gleitfläche die gleiche Oberflächenbeschaffenheit aufweist.

6. Zylinderlaufbuchse aus Gusseisen gemäß einem der Ansprüche 1 bis 5, wobei die reduzierte Riefentiefe Rvk gleich oder niedriger als 1,0 $\mu$m ist.

7. Zylinderlaufbuchse aus Gusseisen gemäß einem der Ansprüche 1 bis 4, wobei der Kreuzschliffwinkel gleich oder größer als 3 Grad und gleich oder kleiner als 38 Grad ist.

8. Verbrennungsmotor (100), umfassend:

Eine Zylinderbohrung einschließlich einer aus Gusseisen gefertigten inneren peripheren Gleitfläche;
einen Kolben (120), der auf einer inneren peripheren Seite der Zylinderbohrung angeordnet ist; und
einen Kolbenring (130), der in einer ringförmigen Nut montiert ist, die entlang der Umfangsrichtung des Kolbens auf der Außenumfangsfläche des Kolbens vorgesehen ist,
wobei die innere, periphere Gleitfläche einen Bereich umfasst, der den Ausdruck (1) bis Ausdruck (4) erfüllt,
wobei in dem Bereich, der den Ausdruck (1) bis Ausdruck (4) erfüllt, eine Bearbeitungsmarkierung in Form eines Kreuzschliffmusters ausgebildet ist, das eine erste Gruppe paralleler gerader Linien (22) und eine zweite Gruppe paralleler gerader Linien (24) umfasst, die die erste Gruppe paralleler Linien kreuzt,
wobei der Kreuzschliffwinkel, der durch die Richtung, in der sich die erste Gruppe paralleler Linien von einer Seite zur anderen Seite in Umfangsrichtung der Zylinderbohrung erstreckt, und die Richtung, in der sich die zweite Gruppe paralleler Linien von der einen Seite zur anderen Seite in Umfangsrichtung der Zylinderbohrung erstreckt, gebildet wird, gleich oder größer als 3 Grad und gleich oder kleiner als 50 Grad ist,
wobei es sich bei dem Gusseisen um Gusseisen mit Lamellengrafit handelt,
wobei die Härte des Gusseisens gemäß JIS Z 2245:2011 gleich oder höher als 90 HRB und gleich oder niedriger als 115 HRB ist,

- $$\text{Ausdruck (1) } Rvk/Rk \geq 1,0$$

- $$\text{Ausdruck (2) } 0,08 \ \mu m \leq Rk \leq 0,2 \ \mu m$$

- $$\text{Ausdruck (3) } Rk-Rpk \geq 0,02 \ \mu m$$

- $$\text{Ausdruck (4) } Rvk \leq 1,1 \ \mu m$$

[in Ausdruck (1) bis Ausdruck (4) gilt: Rk ist eine Kernrautiefe basierend auf JIS B0671-2:2002, Rpk ist eine reduzierte Spitzenhöhe basierend auf JIS B0671-2:2002 und Rvk für die reduzierte Riefentiefe basierend auf JIS B0671-2:2002.]

9. Verbrennungsmotor gemäß Anspruch 8, ferner eine Zylinderlaufbuchse aus Gusseisen umfassend, die eine innere periphere Gleitfläche mit einem Bereich aufweist, der den Ausdruck (1) bis Ausdruck (4) erfüllt.

10. Verbrennungsmotor gemäß Anspruch 9, ferner einen Zylinderblock aus Gusseisen umfassend, der die Zylinderbohrung beinhaltet.

11. Verbrennungsmotor gemäß einem der Ansprüche 8 bis 10, wobei die gesamte Oberfläche der inneren peripheren Gleitfläche dieselbe Oberflächenbeschaffenheit aufweist.

12. Verbrennungsmotor gemäß einem der Ansprüche 8 bis 11, wobei die reduzierte Riefentiefe Rvk gleich oder niedriger als 1,0 µm ist.

13. Verbrennungsmotor gemäß einem der Ansprüche 8 bis 12, wobei der Kreuzschliffwinkel gleich oder größer als 3 Grad und gleich oder kleiner als 38 Grad ist.

**Revendications**

1. Chemise de cylindre en fonte (10) comprenant une surface de glissement périphérique interne réalisée en fonte,

dans laquelle la surface de glissement périphérique interne inclut une région satisfaisant à l'expression (1) à l'expression (4),
dans laquelle une marque d'usinage constituée d'un motif de hachurage incluant un premier groupe de lignes droites parallèles (22) et un deuxième groupe de lignes droites parallèles (24) croisant le premier groupe de lignes parallèles est formée dans la région satisfaisant à l'expression (1) à l'expression (4),
dans laquelle un angle de hachurage, formé par une direction dans laquelle le premier groupe de lignes parallèles s'étend d'un côté à un autre côté dans une direction circonférentielle de chemise de cylindre et une direction dans laquelle le deuxième groupe de lignes parallèles s'étend de l'un côté à l'autre côté dans la direction circonférentielle de chemise de cylindre, est égal à ou plus grand que 3 degrés et égal à ou plus petit que 50 degrés, la fonte étant de la fonte à graphite lamellaire,
la dureté de la fonte à graphite lamellaire, d'après JIS Z 2245:2011 étant égale ou supérieure à 90 HRB et égale ou inférieure à 115 HRB,

.

$$\text{Expression (1) } Rvk/Rk \geq 1,0$$

.

$$\text{Expression (2) } 0,08 \ \mu m \leq Rk < 0,2 \ \mu m$$

.

$$\text{Expression (3) } Rk-Rpk \geq 0,02 \ \mu m$$

.

$$\text{Expression (4) } Rvk \leq 1,1 \ \mu m$$

[dans l'expression (1) à l'expression (4), Rk est une profondeur de rugosité centrale basée sur JIS B0671-2:2002, Rpk est une hauteur de crête réduite basée sur JIS B0671-2:2002, et Rvk est une profondeur de creux réduite basée sur JIS B-0671-2:2002].

2.  Chemise de cylindre en fonte selon la revendication 1, dans laquelle Rvk/Rk de la région satisfaisant à l'expression (1) à l'expression (4) est égal à ou supérieur à 1,5.

3.  Chemise de cylindre en fonte selon la revendication 1 ou 2, dans laquelle la profondeur de rugosité centrale Rk de la région satisfaisant à l'expression (1) à l'expression (4) est égale à 0,2 $\mu$m, et Rvk/Rk de la région satisfaisant à l'expression (1) à l'expression (4) est égal à ou supérieur à 0,3.

4.  Chemise de cylindre en fonte selon n'importe laquelle des revendications 1 à 3, dans laquelle une rugosité arithmétique moyenne Ra basée sur JIS B0601:2013 de la région est égale à ou inférieure à 0,5 $\mu$m.

5.  Chemise de cylindre en fonte selon n'importe laquelle des revendications 1 à 4, dans laquelle une surface entière de la surface de glissement périphérique interne a la même propriété de surface.

6.  Chemise de cylindre en fonte selon n'importe laquelle des revendications 1 à 5, dans laquelle la profondeur de creux réduite Rvk est égale à ou inférieure à 1,0 $\mu$m.

7.  Chemise de cylindre en fonte selon n'importe laquelle des revendications 1 à 4, dans laquelle l'angle de hachurage est égal à ou plus grand que 3 degrés et égal à ou plus petit que 38 degrés.

8.  Moteur à combustion interne (100), comprenant :

    un alésage de cylindre incluant une surface de glissement périphérique interne réalisée en fonte ;
    un piston (120) agencé sur un côté périphérique interne de l'alésage de cylindre ; et
    un segment de piston (130) monté sur une rainure annulaire prévue le long d'une direction circonférentielle de piston sur une surface périphérique externe du piston,
    dans lequel la surface de glissement périphérique interne inclut une région satisfaisant à l'expression (1) à l'expression (4),
    dans lequel une marque d'usinage constituée d'un motif de hachurage incluant un premier groupe de lignes droites parallèles (22) et un deuxième groupe de lignes droites parallèles (24) croisant le premier groupe de lignes parallèles est formée dans la région satisfaisant à l'expression (1) à l'expression (4),
    dans lequel un angle de hachurage, formé par une direction dans laquelle le premier groupe de lignes parallèles s'étend d'un côté à un autre côté dans une direction circonférentielle d'alésage de cylindre et une direction dans laquelle le deuxième groupe de lignes parallèles s'étend de l'un côté à l'autre côté dans la direction circonférentielle d'alésage de cylindre, est égal à ou plus grand que 3 degrés et égal à ou plus petit que 50 degrés,

la fonte étant de la fonte à graphite lamellaire,
la dureté de la fonte à graphite lamellaire, d'après JIS Z 2245:2011 étant égale ou supérieure à 90 HRB et égale ou inférieure à 115 HRB,

$$\text{Expression (1)} \quad Rvk/Rk \geq 1,0$$

.

$$\text{Expression (2)} \quad 0,08 \text{ µm} \leq Rk < 0,2 \text{ µm}$$

.

$$\text{Expression (3)} \quad Rk - Rpk \geq 0,02 \text{ µm}$$

.

$$\text{Expression (4)} \quad Rvk \leq 1,1 \text{ µm}$$

[dans l'expression (1) à l'expression (4), $Rk$ est une profondeur de rugosité centrale basée sur JIS B0671-2:2002, $Rpk$ est une hauteur de crête réduite basée sur JIS B0671-2:2002, et $Rvk$ est une profondeur de creux réduite basée sur JIS B-0671-2:2002].

9.  Moteur à combustion interne selon la revendication 8, comprenant en outre une chemise de cylindre en fonte incluant une surface de glissement périphérique interne ayant une région satisfaisant à l'expression (1) à l'expression (4).

10. Moteur à combustion interne selon la revendication 9, comprenant en outre un bloc-cylindres en fonte incluant l'alésage de cylindre.

11. Moteur à combustion interne selon n'importe laquelle des revendications 8 à 10, dans lequel une surface entière de la surface de glissement périphérique interne a la même propriété de surface.

12. Moteur à combustion interne selon n'importe laquelle des revendications 8 à 11, dans lequel la profondeur de creux réduite $Rvk$ est égale à ou inférieure à 1,0 $\mu$m.

13. Moteur à combustion interne selon n'importe laquelle des revendications 8 à 12, dans lequel l'angle de hachurage est égal à ou plus grand que 3 degrés et égal à ou plus petit que 38 degrés.

**FIG. 1A**

**FIG. 1B**

**FIG. 2**

**FIG. 3**

**FIG. 4**

REGION Tu

**FIG. 5A**

$\theta$ u :
20 DEGREES

REGION Td

**FIG. 5B**

$\theta$ d :
10 DEGREES

Y
Y1

X

Y2

REGION Tu

Ra  0.11 μm

Rk  0.21 μm

Rpk  0.09 μm

Rvk  0.29 μm

Rvk/Rk  1.38

Rk−Rpk  0.12 μm

**FIG. 6A**

1 μm

200 μm

REGION Td

Ra  0.19 μm

Rk  0.28 μm

Rpk  0.10 μm

Rvk  0.56 μm

Rvk/Rk  2.00

Rk−Rpk  0.18 μm

**FIG. 6B**

1 μm

200 μm

**FIG. 7**

VERTICAL MAGNIFICATION: 10,000X

HORIZONTAL MAGNIFICATION: HORIZONTAL 50X

## FIG. 8A

VERTICAL MAGNIFICATION: 5,000X

HORIZONTAL MAGNIFICATION: HORIZONTAL 50X

## FIG. 8B

VERTICAL MAGNIFICATION: 5,000X

HORIZONTAL MAGNIFICATION: HORIZONTAL 50X

## FIG. 8C

**FIG. 9**

**EP 3 657 000 B2**

**REFERENCES CITED IN THE DESCRIPTION**

**Patent documents cited in the description**

- CN 204610056 U
- JP 2004116707 A
- JP 4984214 B
- JP 4954644 B
- JP 2012012957 A
- JP 4678802 B
- JP 2860537 B